# EUROPÄISCHE PATENTSCHRIFT

(11) **EP 2 758 684 B1**
(45) Veröffentlichungstag und Bekanntmachung des Hinweises auf die Patenterteilung: **13.01.2016**
(21) Anmeldenummer: 12778206.8
(22) Anmeldetag: 18.09.2012
(51) Int. Cl.: F16D 3/68, F16D 3/18

(54) **KUPPLUNG MIT KUPPLUNGSRING AUF ZWEI KUPPLUNGSTEILEN UND ZUGEHÖRIGER KUPPLUNGSRING**
COUPLING WITH COUPLING RING ON TWO COUPLING PARTS, AND ASSOCIATED COUPLING RING
ACCOUPLEMENT MUNI D'UNE BAGUE D'ACCOUPLEMENT SUR DEUX ÉLÉMENTS D'ACCOUPLEMENT, ET BAGUE D'ACCOUPLEMENT ASSOCIÉE

(30) Priorität: 20.09.2011 DE 202011105999 U; 20.09.2011 DE 202011106000 U
(43) Veröffentlichungstag der Anmeldung: 30.07.2014
(73) Patentinhaber: KWD Kupplungswerk Dresden GmbH, 01159 Dresden (DE)
(72) Erfinder: SPENSBERGER, Johann, 01734 Rabenau (DE); HAEDRICH, Eberhard, 01705 Pesterwitz (DE)
(74) Vertreter: Hempel, Hartmut
(86) Internationale Anmeldenummer: PCT/DE2012/000936
(87) Internationale Veröffentlichungsnummer: WO 2013/041082

(56) Entgegenhaltungen:
- DE-A1- 19 639 304
- DE-U1- 29 522 268
- DE-U1-202009 015 790
- GB-A- 377 454

## Beschreibung

Die Erfindung betrifft eine Kupplung mit Kupplungsring auf zwei Kupplungsteilen und einen zugehörigen Kupplungsring.

Eine elastische Gelenkkupplung mit einem zwischen zwei Kupplungsteilen angeordneten Kupplungsring, der aus einzelnen am Umfang verteilt in Gummiblöcken einvulkanisierten Metallelementen in Form von Befestigungskörpem besteht, die wechselseitig mit den Kupplungsteilen verschraubt sind, ist in der Druckschrift DE 196 39 304 A1 beschrieben. Die Metallelemente des Kupplungsringes bestehen ausschließlich aus in Umfangsrichtung gleichmäßig verteilten Keilen, die sich in radialer Richtung über die gesamte Ringbreite erstrecken. Zwischen den Keilen stehen einvulkanisierte Gummiblöcke im eingebauten Zustand in Umfangsrichtung unter Druckvorspannung.
Der Kupplungsring kann aus Einzelsegmenten mit mindestens einem Gummiblock und beidseitig anvulkanisierten Metallelementen, die jeweils zu Keilen verbindbar sind, bestehen.
Die vorhandenen Verschraubungen zwischen den Kupplungsteilen und dem dazwischen befindlichen Kupplungsring sind zur Kupplungsachse axial gerichtet ausgebildet.

Ein Problem besteht darin, dass mit dem Befestigen des Kupplungsrings ein erhöhter Aufwand sowohl bei der Montage und als auch der Demontage der Kupplungsteile vorhanden ist, weil unter anderem für die Anbringung der axial gerichteten Verschraubungen zwingend eine Montagevorrichtung sowie Montageplatz erforderlich sind.

Des Weitem ist eine elastische Wellenkupplung mit einem zwischen einem treibenden Kupplungsteil und einem getriebenen Kupplungsteil angeordneten, im Wesentlichen ringförmigen Kupplungselement aus einem elastischen Werkstoff, insbesondere Gummi, in der Druckschrift DE 20 2004 003 933 U1 beschrieben, wobei zur Verbindung des ringförmigen Kupplungselements mit den Kupplungsteilen in das ringförmige Kupplungselement metallische Körper mit Bohrungen zum Durchgriff mit jeweils einer in das betreffende Kupplungsteil eingreifenden Befestigungsschraube einvulkanisiert sind, wobei ferner das ringförmige Kupplungselement im Bereich wenigstens eines Metallteils aufgespaltet ist und der dadurch zwischen den Metallteilsegmenten vorhandene Spalt mit Hilfe der Befestigungsschrauben und wenigstens einer von dieser beaufschlagten Fixiervorrichtung im Betrieb der Kupplung im Wesentlichen geschlossen bleibt.
Dabei ist wenigstens eine Fixiervorrichtung im Wesentlichen ausschließlich dem aufgespalteten Metallteil zugeordnet.
Das ringförmige Kupplungselement weist an den im Wechsel mit den anvulkanisierten Federelementen vorhandenen Befestigungskörpem sowohl radial gerichtete Bohrungen als auch axial gerichtete Bohrungen jeweils im Wechsel auf. Ober die radial gerichteten Bohrungen wird mit radial gerichteten Verschraubungen das ringförmige Kupplungselement nur an dem einen Kupplungsteil befestigt. Ober die axial gerichteten Bohrungen wird mit axial gerichteten Verschraubungen das ringförmige Kupplungselement mit dem anderen Kupplungsteil verbunden. Damit ist einerseits durch die radiale Bohrungsausbildung und andererseits durch die axiale Bohrungsausbildung des ringförmigen Kupplungselements eine radiale-axiale Verbindung zwischen den am ringförmigen Kupplungselement befestigten Kupplungsteilen vorhanden. Soll die Verbindung radial ausbaubar sein, ist es erforderlich, das ringförmige Kupplungselement in mindestens zwei Segmente zu teilen, die während der Montage zum ringförmigen Kupplungselement zusammengesetzt werden müssen.

Ein Problem besteht darin, dass die Montage und die Demontage in verschiedene Richtungen der Verschraubungen, nämlich der axial gerichteten Verschraubungen und der radial gerichteten Verschraubungen, durchgeführt werden müssen, was einen höheren Montageplatzbedarf erfordert.

Eine elastische Wellenkupplung mit zwei Kupplungsteilen, die biegesteife eingreifende Arme aufweisen und die soweit reichen, dass zwischen den Armen elastische Materialkeile mit seitlich anvulkanisierten Ausgangsteilen positioniert sind, ist in dem Dokument GB 377 454 A beschrieben, wobei die Ausgangsteile mittels radial verschraubbarer Metallplatten einstellbar zwischen die Arme verpresst sind, die an den äußeren Seitenkanten der Ausgangsteile der elastischen Materialkeile anliegen.
Die elastischen Materialkeile sind dabei weitgehend zwischen den gegenüberliegenden Kupplungsteilen und zwischen den Armen eingebracht.
Die elastischen Materialkeile stellen Segmente mit seitlich anvulkanisierten Ausgangsteilen dar, die in radial geführte Ausnehmungen der Arme eingeschoben sind.
Die gegenüberliegenden Ausgangsteile zweier benachbarter Materialkeile stützen sich im Montagefall auf den betreffenden Arm eines Kupplungsteils ab, wobei die Ausgangsteile durch die mit zwei Löchern versehene Metallplatte radial an den Arm festgeschraubt und gehaltert werden.

Die Mittel zur Einstellung des statischen Drucks stellen radiale Verschraubungen dar, die senkrecht zu den peripheren Endoberflächen der Arme vorhanden sind, weil die Arme von den Endoberflächen aus zwei radial gerichtete Gewindebohrungen haben.

Dabei sind die keilförmigen metallischen Befestigungselemente im Wesentlichen dreiteilig und entstehen als Ganzes erst in der Zusammenführung der beiden Ausgangsteile der jeweiligen benachbarten elastischen Materialkeile und der Metallplatte, die zwei Löcher zur Durchführung der radialen Verschraubung mit den zwei radiale Gewindebohrungen besitzenden Armen aufweist, so dass die Ausgangsteile der elastischen Materialkeile radial gerichtet in die Ausnehmungen (Aussparungen) der Arme des jeweiligen Kupplungsteils gepresst sind.
Die elastischen Materialkeile sind zur Ringachse keilförmig ausgebildet und sind beidseitig seitlich mit den Ausgangsteilen verbunden. Die mit den Ausgangsteilen versehenen Materialkeile stellen Segmente dar. D.h., die seitlich mit den Ausgangsteilen plattierten Materialkeile sind Segmente, die in die Aussparungen zwischen den ver setzten Armen der Kupplungsteile eingesetzt werden und nach dem Montagefall dort gehalten werden. Das reicht aber nicht aus, das Kriterium eines einheitlichen ungeteilten Ring zu erhalten. Denn die Segmente werden in einem ersten Montagevorgang zwischen die Arme geschoben und von den Ausgangteilen in den Armen gehaltert und in einem zweiten Montagevorgang über die radiale Verschraubung der Metallplatten in den Armen brückenartig zu einem Kupplungsring geführt. Die brückenartige Zusammenführung stellt nicht einen ohne Kupplungsteile existierenden, eigenständigen Kupplungsring dar.

Eine Keilpaket-Kupplung mit einem im Wesentlichen ringförmigen Kupplungskörper ist in dem Dokument DE 20 2009 015 790 U1 beschrieben, wobei der ringförmige Kupplungskörper aus einer Vielzahl einzelner gummielastischer Segmente gebildet ist. In die Segmente sinn. Befestigungsglieder mit Befestigungsbohrungen zur Anordnung an einem antreibenden und einem angetriebenen Maschinenbauteil sowie elastizitätsverringernde Elemente einvulkanisiert.

Dabei sind die Segmente mittels schamierartiger Verbindungselemente aneinander festgelegt und bilden einen einstückigen, radial aufweitbaren, im Wesentlichen ringförmigen Kupplungskörper, der mittels jeweils segmentverschobenen radialen und axialen Verschraubungen und einem Scharnier zwischen zumindest zwei Segmenthälften ausgebildet ist.

Der angegebene, geschlossene Kupplungskörper besteht aus mindestens zwei Ringteilen/Ringsegmenten mit Schamierverbindung und ist nicht als Ganzes in einem Vulkanisierungsvorgang zu einem geschlossenen Kupplungsring gebildet worden. Damit ist kein ungeteilter, kein unsegmentierter Kupplungsring mit ausschließlich radialen Verschraubungen vorgesehen. Zur Montage ist eine Montagevorrichtung erforderlich;

Ein Quertrieb mit einem Motor, dessen Läuferwelle parallel zur Treibachse eines Schienenfahrzeuges liegt und mit einem Achsgetriebe verbunden ist, ist in dem Dokument DE 295 22 268 U1 beschrieben. Das Achsgetriebe umfasst eine Ritzelhohlwelle, die eine ZahnweUe umschließt, wobei die Zahnwelle zumindest teilweise innerhalb der Ritzelhohlwelle verläuft. Die Läuferwelle mit ihrem abtriebsseitigen Ende ist über eine Motorantriebskupplung mit der Zahnwelle gekoppelt und die Motorabtriebskupplung ist als Winkel- und axialnachgiebige Kupplung ausgebildet.
Dabei ist die Zahnwelle über eine Getriebeantriebskupplung mit der Ritzelhohlwelle gekoppelt. Die Zahnwelle ist an ihren Enden durch Spiralfedern axial fixiert, wobei die Spiralfedern die Zahnwelle nach einer Auslenkung wieder in ihre Mittenstellung zur Ritzelhohlwelle zurückführen.

In der Kupplung ist somit kein ungeteilter unsegmentierter Kupplungsring enthalten. Ein sich selbst tragender Kupplungsring ohne Verschraubung an den Kupplungsteilen ist nicht vorhanden.

Eine elastische Gelenkkupplung mit einem zwischen zwei Kupplungsflanschen angeordneten Zwischenring ist in dem Dokument DE 196 39 304 A1 beschrieben, wobei der Zwischenring aus einzelnen am Umfang verteilt in Gummiblöcken einvulkanisierten Metallelementen besteht, die wechselseitig mit den Kupplungsflanschen verschraubt sind.
Dabei bestehen die Metallelemente des Zwischenrings ausschließlich aus in Umfangsrichtung gleichmäßig oder im Wesentlichen gleichmäßig verteilten Keilen, die sich in radialer Richtung über die gesamte Ringbreite erstrecken. Zwischen den Keilen stehen einvulkanisierte Gummiblöcke im eingebauten Zustand in Umfangsrichtung unter Druckvorspannung.

Damit ist ein Kupplungsring dargestellt, der aus Segmenten besteht, die wechselseitig axial zu einem Kupplungsringkörper zusammengeschraubt und zugleich mit der wechselseitig axialen Verschraubung an den wechselseitig angeordneten Armen der Kupplungssteme befestigt sind. Ein sich selbst tragender Kupplungsring mit der Möglichkeit einer radialen Verschraubung ist nicht vorhanden. Auch hier ist eine Montagevorrichtung zur Montage des Kupplungsringkörpers erforderlich.

Außerdem ist eine Doppelgefenkkupplung mit zwei Gelenkebenen in der Druckschrift 20 2005 015 769 U1 beschrieben, in der zwei Kupplungsgelenke vorhanden sind, die durch eine Welle miteinander verbunden sind, wobei die eine Gelenkebene einem Zahnkupplungsgelenk mit Balligverzahnung mit winkligem und axialem Ausgleichsvermögen und wobei die andere Gelenkebene einem drehsteifen, biegeelastischen Kupplungsgelenk zugeordnet sind.

Herkömmliche Zahnkupplungen mit Balligverzahnung zum Übertragen von Drehmomenten werden zum Verbinden einer treibenden Welle und einer getriebenen Welle eingesetzt, um die zwischen den beiden Wellen auftretenden achsparallelen, axialen oder winkligen Verlagerungen auszugleichen.

Herkömmliche drehsteife, biegeelastische Kupplungen, wie z.B. Ganzmetallkupplungen, sind Kupplungen, die durch Federeigenschaften die Verlagerung ausgleichen. Sie haben dadurch den Vorteil, dass sie sowohl dauerfest als auch wartungsfrei sind. Sie weisen aber enge Grenzen im Bereich der elastischen Verformung und damit der Verlagerungen auf, wobei das axiale Verlagerungsvermögen weitgehend eingeschränkt ist.

Eine andere Doppelgelenkkupplung in Form eines Querantriebes mit einem Motor ist in der Druckschrift DE 295 22 268 U1 beschrieben, wobei die Läuferwelle des Motors parallel zur Treibachse eines Schienenfahrzeuges liegt und mit einem Achsgetriebe verbunden ist, welches eine Ritzelhohlwelle umfasst, die eine Zahnwelle umschließt, wobei die Zahnwelle zumindest teilweise innerhalb der Ritzelhohlwelle verläuft. Die Läuferwelle mit ihrem abtriebsseitigen Ende ist über eine Motorabtriebskupplung mit der Zahnwelle gekoppelt. Die Motorabtriebskupplung ist als winkel- und axialnachgiebige Kupplung ausgebildet. Die Zahnwelle ist über eine Getriebeantriebskupplung mit der Ritzelhohlwelle gekoppelt an ihren Enden durch Spiralfedern axial fixiert, wobei die Spiralfedern die Zahnwelle nach einer Auslenkung wieder in ihre Mittenstellung zur Ritzelhohlwelle zurückführen.

Ein Problem besteht darin, dass durch die unmittelbare direkte Bindung der Zahnwelfe an die Ritzelhohlwelle über die Balligverzahnung keine freie Austauschbarkeit der Kupplungselemente des Kupplungsgelenks mit Balligverzahnung im Falle eines Defektes möglich ist.

Der Erfindung liegt die Aufgabe zugrunde, eine Kupplung mit Kupplungsring auf zwei Kupplungsteilen und zugehöriger Kupplungsring anzugeben, wobei unter Vereinfachung der Montagebedingungen der Kupplungsring als ganzer, einstückiger Ring durch eine ganzringförmige, gleichzeitig durchführbare Vulkanisierung ausgebildet und dann erst als solcher auf die freien Sternstimarmendbereiche aufgeschraubt werden kann.

Die Aufgabe wird durch die Patentansprüche 1 und 25 gelöst.
In der Kupplung mit einem Kupplungsring auf zwei Kupplungsteilen weisen die Kupplungsteile jeweils einen Stern mit Stemarmen und daran befindlichen Stemarmstimbereichen auf, wobei die beiden Sterne sich gegenüberliegend und axial zueinander winkelversetzt angeordnet und die Stemarmstimbereiche mit jeweils mindestens einer Gewindebohrung für Verschraubungen versehen sind, wobei
- zum Kupplungsring mehrere zur Achse des Kupplungsrings gerichtete, ringumlaufend angeordnete Befestigungselemente mit jeweils mindestens einer ausschließlich radial zur Ringachse gerichteten, durchgängigen Bohrung gehören, wobei die durchgängigen Bohrungen für mindestens eine ausschließlich radial gerichtete Verschraubung zur Befestigung der Befestigungselemente an den radial zur Ringachse gerichteten Gewindebohrungen der stemwechselseitig befindlichen Stemarmstimbereiche vorhanden sind,
- zwischen den ringumlaufend benachbart angeordneten Befestigungselementen jeweils ein elastisches Federelement vorhanden ist,
- die Befestigungselemente des Kupplungsrings jeweils eine axial verlaufende zur Ringachse gerichtete Fläche aufweisen, die jeweils mit einer axial verlaufenden Fläche der Stemarmstimbereiche im Montagefall korrespondiert,
wobei gemäß dem Kennzeichenteil des Patentanspruchs 1
- die den Befestigungselementen des Kupplungsrings angepassten, jeweils zu einem Stern gehörenden Sternarmstirnbereiche Endbereiche der von einem zentralen Bereich des Sterns ausgehenden Sternarme darstellen, wobei die Endbereiche eine zu den Befestigungselementen gerichtete Fläche aufweisen, mit der eine berührende Verbindung zur Fläche am inneren Endbereich des jeweiligen Befestigungselementes vorhanden ist,
- wobei die ringumlaufend abwechselnde Anordnung der Befestigungselemente und der elastischen Federelemente, die an den jeweils benachbarten Befestigungselementen in einem gleichzeitig durchgeführten Vulkanisierungsvorgang anvulkanisiert befestigt sind, einen in dem gleichzeitig durchgeführten Vulkanisierungsvorgang hergestellten Kupplungsring ausbildet, der als Ganzes auf die beiden axial versetzten Stemarmstimbereiche aufgeschraubt ist,
- so dass der Kupplungsring einen elastischen, ungeteilt ausgebildeten Kupplungsring darstellt und eine einheitliche tangentiale Vorspannungserzeugung gestattet, wobei sich die tangentiale Vorspannungserzeugung auf die zwei sich axial zueinander winkelversetzt gegenüberliegende Sterne der zwei Kupplungsteile bezieht.

Die Befestigungselemente können in Richtung zur Ringachse vorzugsweise keilförmig geformt und metallisch ausgebildet sein. Die Befestigungselemente können aber auch aus anderen festen Materialien bestehen. Die Befestigungselemente können des Weiteren mit verschiedenen Formen ebenso wie die Federelemente versehen sein, wobei die Formen beider Elemente ringumlaufend einander angepasst sind.

Die Stemarmstimbereiche der Sterne können andererseits jeweils eine axial gerichtete Fläche mit Profil aufweisen, die vor der Verschraubung unterhalb der Fläche mit Profil am keilförmig schmalen Endbereich des jeweiligen Befestigungselementes positioniert ist, wobei im Montagefall sich beide Flächen berühren.

Die Profile der Flächen der Befestigungselemente und die Profile der Flächen der Sternarmstirnbereiche können korrespondierende, zueinander formschlüssige Ausbildungen sein.

Die Profile der Flächen der Befestigungselemente können eine Nut oder eine Feder sein und die Profile der Flächen der Stemarmstimbereiche können eine dazu formschlüssig passend korrespondierende Feder oder Nut sein.

Die Profile der Flächen der Befestigungselemente können eine Kupplungsverzahnung in Form von Keilen oder von Zähnen sein und die Profile der Flächen der Stemarmstimbereiche können eine dazu passende Kupplungsverzahnung darstellen.

Die Profile der Flächen der Befestigungselemente und die Profile der Flächen der Stemarmstimbereiche können korrespondierende, zueinander kraftschlüssige Ausbildungen sein.
Dabei können die Profile der Flächen der Befestigungselemente und die Profile der Flächen der Stemarmstimbereiche zueinander angepasste ebene oder zueinander angepasste gekrümmte oder auch topografisch ausgebildete Flächen sein, die sich im Montagefall berühren.

Auch mittels Stiften und Passschrauben können die Befestigungselemente zusätzlich an den Stemarmstimbereichen gehaltert sein.

Alle metallischen Befestigungselemente können am ringaußen befindlichen Endbereich vorzugsweise äußere Einlassungen/Aussparungen jeweils in Form entweder einer Versenkungsnut oder einer Senkbohrung für die radial gerichteten Verschraubungen aufweisen.

Die Federelemente können aus elastischem Material, insbesondere aus Gummi bestehen. Sie können zumindest mindestens eine zur Ringachse gerichtete, vorzugsweise ebene Stützplatte aufweisen.

Mittels der Verschraubungen können wechselweise, ausgehend von einem Befestigungselement des Kupplungsrings, das Befestigungselement mit dem Stemarmstimbereich des einen Sterns verbunden sein und dann das dem Befestigungselement benachbarte Befestigungselement mit dem zum Stemarmstimbereich des einen Sterns benachbarten Stemarmstimbereich des anderen Sterns verbunden sein, wobei danach wieder ein weiteres Befestigungselement mit einem weiteren Stemarmstimbereich des einen Sterns verbunden ist, so dass der Kupplungsring ringumlaufend auf den Kupplungsteilen aufgeschraubt ist.

Die Kupplung mit Kupplungsring auf zwei Kupplungsteilen kann zumindest Teil einer Doppelgelenkkupplung sein, wobei zumindest eines der Kupplungsteile mit einer über eine Welle angeschlossenen Zahnkupplung mit Balligverzahnung oder mit einer über eine Welle angeschlossenen Kupplung mit dem gleichen Kupplungsring der dem erfindungsgemäßen Kupplungsring entsprechenden Bauart oder mit einer anderen über eine Welle angeschlossenen Kupplung mit kardanischen Verlagerungsmöglichkeiten in Verbindung stehen kann.

Die Kupplung mit Kupplungsring auf zwei Kupplungsteilen kann auch in einer Doppelgelenkkupplung mit zwei Gelenkebenen, die zwei Kupplungen, die durch eine Welle miteinander verbunden sind, enthält, eingesetzt sein,
wobei die eine Gelenkebene einer Zahnkupplung mit Balligverzahnung mit winkligem und axialem Ausgleichsvermögen zugeordnet ist,
wobei die Zahnkupplung mit Balligverzahnung eine Hülse mit Innenverzahnung und eine tauschbare Kupplungsnabe mit dazu gehöriger Außenverzahnung aufweist, wobei die Welle endbereichsseitig mit der tauschbaren Kupplungsnabe verbunden ist, und
wobei die andere Gelenkebene der Kupplung mit Kupplungsring auf zwei Kupplungsteilen zugeordnet ist.

Die Kupplung weist einen Kupplungsring auf, der als einheitlicher, innerhalb der Befestigungselemente und innerhalb der Federelemente ungeteilter und unsegmentierter Kupplungsring ausgebildet ist und zur Vorspannungserzeugung auf zwei winkelversetzt sich gegenüberliegenden Sternen mit axial zum Stemmittenbereich versetzten Stemarmstimbereichen mit jeweils mindestens einer Gewindebohrung für Verschraubungen dient, wobei an den Stemarmstimbereichen jeweils ein zur Achse des Kupplungsrings gerichtetes axial verlaufendes Profil ausgebildet sind, wobei an dem einen Stern ein zugeordnetes antriebsseitiges Kupplungsteil und an dem anderen Stern ein abtriebsseitiges Kupplungsteil angeordnet sind, wobei
- zum Kupplungsring mehrere zur Achse des Kupplungsrings gerichtete, ringumlaufend angeordnete, vorzugsweise keilförmig geformte metallische Befestigungselemente mit jeweils einer ausschließlich radial zur Ringachse gerichteten durchgängigen Bohrung gehören, wobei die durchgängigen Bohrungen für mindestens eine ausschließlich radial gerichtete Verschraubung zur Befestigung der Befestigungselemente an radial zur Ringachse gerichteten Gewindebohrungen der sternwechselseitig befindlichen Sternarmstirnbereiche vorhanden sind,
- die keilförmigen Befestigungselemente des Kupplungsrings ein axial verlaufendes Profil zur Ringachse gerichtet aufweisen, das jeweils mit dem Profil der Sternarmstimbereiche im Montagefall arretiert korrespondiert,
- zwischen den ringumlaufend benachbarten Befestigungselementen jeweils ein elastisches Federelement vorhanden ist, das an den benachbarten Befestigungselementen in einem gleichzeitig durchgeführten Vulkanisierungsvorgang anvulkanisiert befestigt ist,
- so dass eine ringumlaufend wechselweise Anordnung der metallischen keilförmigen Befestigungselemente und der elastischen Federelemente einen in dem gleichzeitig durchgeführten Vulkanisierungsvorgang hergestellten Keilpaket-Kupplungsring ausbildet, der als Ganzes auf die beiden sternwechselseitig axial versetzten Stemarmstimbereiche aufgeschraubt ist.

Der Kupplungsring kann eine Kombination von Befestigungselementen und anvulkanisierten Federelementen aufweisen, wobei die Befestigungselemente mit verschiedenen Formen ebenso wie die Federelemente versehen sein können, vorzugsweise können bei keilförmig zur Ringachse gerichtet ausgebildeten Befestigungselementen die Federelemente quaderförmig ausgebildet sein.

Die elastische Kupplung mit dem Kupplungsring kann eine einkardanische Kupplung darstellen.

Zwei elastische Kupplungen können über die Verbindung mit einer Welle als eine doppelkardanische Kupplung ausgebildet sein.

Die Zahnkupplung mit Balligverzahnung kann durch eine Membrankupplung oder Ringscheibenkupplung ersetzt sein.

Die Anordnung der beiden Kupplungen in ihren Gelenkebenen kann im Bereich von Radsätzen von Schienenfahrzeugen sowohl außerhalb als.auch innerhalb der Radsätze der Schienenfahrzeuge eingesetzt sein. Das Einsatzgebiet der Kupplung/en bleibt nicht auf Schienenfahrzeuge beschränkt.

Der erfindungsgemäße zugehörige Kupplungsring für die vorhergehend genannten 5 Kupplungen ist gemäß Patentanspruch 25 als einheitlicher, zumindest innerhalb von Befestigungselementen ungeteilter und unsegmentierter Kupplungsring ausgebildet, wobei
- zum Kupplungsring mehrere zur Achse des Kupplungsrings gerichtete, ringumlaufend angeordnete Befestigungselemente mit jeweils mindestens einer ausschließlich radial zur Ringachse gerichteten durchgängigen Bohrung gehören, wobei die durchgängigen Bohrungen für mindestens eine ausschließlich radial gerichtete, vom Ringaußenbereich aus ausführbare Verschraubung zur Befestigung der Befestigungselemente auf zwei angepasste Kupplungsteile einer Kupplung dienen,
- die Befestigungselemente des Kupplungsrings am Ringinnenbereich jeweils ein axial verlaufendes Profil zur Ringachse gerichtet aufweisen,
- zwischen den ringumlaufend benachbart angeordneten Befestigungselementen jeweils ein elastisches Federelement vorhanden ist, das an den benachbarten Befestigungselementen in einem gleichzeitig durchgeführten Vulkanisierungsvorgang anvulkanisiert befestigt ist,
- so dass eine ringumlaufend wechselweise Anordnung der Befestigungselemente und der elastischen Federelemente einen in dem gleichzeitig durchgeführten Vulkanisierungsvorgang hergestellten Kupplungsring ausbildet, der als Ganzes auf zwei angepasste Kupplungsteile zur Verbindung der beiden Kupplungsteile über den Kupplungsring radial aufgeschraubt ist.

Die Befestigungselemente können vorzugsweise keilförmig geformt und metallisch ausgebildet sein, so dass ein Keilpaket-Kupplungsring ausgebildet ist.

Die Befestigungselemente können am Ringaußenbereich des Kupplungsrings den keilförmig weiten Endbereich mit einer Fläche abschließen, so dass die Schraubenköpfe der Verschraubungen über den Ringaußenbereich hinausragen können.

Um das zu vermeiden, können die Befestigungselemente am keilförmig weiten Endbereich vorzugsweise äußere Einlassungen/Aussparungen jeweils in Form entweder einer Versenkungsnut oder einer Senkbohrung für die radial gerichteten Verschraubungen zur Versenkung der Schraubenköpfe aufweisen.

Die Befestigungselemente können neben der Keilfiönnigkeitausbildung andererseits mit verschiedenen Formen ebenso wie die elastischen Federelemente mit verschiedenen, den Formen der Befestigungselemente angepassten Formen versehen sein.

Die elastischen Federelemente können aus elastischem Material, vorzugsweise aus Gummi bestehen.

Die elastischen Federelemente können mindestens eine zur Ringachse gerichtete Stützplatte aufweisen. Die radial gerichteten Stützplatten können federelementmittig angeordnet sein. Die Stützplatten können nicht nur mit parallelen ebenen Flächen, sondern auch in einer Keilform zur Ringachse gerichtet ausgebildet sein. Außerdem können die Federelemente mit zumindest einer radial und/oder axial zur Ringachse gerichteten, konkaven Taille ausgebildet sein, wobei bei Vorhandensein einer Stützplatte zu beiden Seiten der jeweiligen Stützplatte der jeweilige Teil des Federelements mit axial zur Ringachse gerichteten konkaven Taillen ringaußen und ringinnen versehen ist. Ebenso kann es sich in der zur Ringachse gerichteten radialen Richtung verhalten, wobei die radial gerichteten konkaven Taillen ringseitlich am Federelement vorhanden sind.

Weiterbildungen und spezielle Ausgestaltungen der Erfindung werden in weiteren Unteransprüchen angegeben.

Die Erfindung wird anhand von Ausführungsbeispielen mittels mehrerer Zeichnungen näher erläutert.

Es zeigen:
- Fig. 1: eine Darstellung in axialer Ansicht der erfindungsgemäßen Kupplung mit Kupplungsring mit ausschließlich radial gerichteten Verschraubungen an den Stemarmstimbereichen der beiden Sterne der zugehörigen Kupplungsteile der Kupplung,
- Fig. 2: eine perspektivische Darstellung des erfindungsgemäßen Kupplungsrings,
- Fig. 3: eine Darstellung des Kupplungsringes in Achsrichtung ohne Kupplungsteile nach Fig. 2,
- Fig. 4a: eine Schnittdarstellung A-A gemäß Fig. 1 des mit Stemarmstimbereichen des gleichen Sterns verschraubten Kupplungsrings,
- Fig. 4b: eine Schnittdarstellung B-B gemäß Fig. 1 des mit einem Sternarmstimbereich des einen Sterns und mit dem Stemarmstimbereich des anderen Sterns verschraubten Kupplungsrings,
- Fig. 5: eine schematische Darstellung eines von Federelementen flankierten keilförmigen Befestigungselements mit ringinnen ausgebildeter Feder zur Arretierung des Kupplungsrings an einer Nut auf einer äußeren Stemarmstimfläche des Sternarmstirnbereiches,
- Fig. 6: eine schematische Darstellung eines von Federelementen flankierten keilförmigen Befestigungselements mit einer ringinnen am schmalen keilförmigen Ende ausgebildeten Nut zur Arretierung des Kupplungsrings am mit einer Feder auf einer äußeren Stemarmstimfläche ausgebildeten Sternarmstirnbereich,
- Fig. 7: eine schematische Darstellung eines keilförmigen Befestigungselements mit einer am schmalen keilförmigen Ende ebenen Fläche zum kraftschlüssigen Kontakt des Kupplungsrings an einer ebenen äußeren Sternarmstirnfläche des Stemarmstimbereiches,
- Fig. 8: eine schematische Darstellung eines Befestigungselements mit einer am schmalen keilförmigen Ende gekrümmten Fläche zum kraftschlüssigen Kontakt des Kupplungsrings an einer gekrümmten äußeren Stemarmstimfläche des Sternarmstirnbereiches,
- Fig. 9: eine perspektivische Darstellung des elastischen ungeteilten Keilpaket-Kupplungsrings in Verbindung mit einer geöffneten Zahnkupplung ohne Hülse,
- Fig. 10: eine perspektivische Darstellung einer einfache einkardanischen Keilpaketring-Kupplung,
- Fig. 11: einen schematischen Schnitt durch eine erfindungsgemäße Doppelgelenkkupplung - Zahnkupplung/Keilpaketring-Kupplung - im ruhenden Zustand,
- Fig. 12: einen schematischen Schnitt durch die Doppelgelenkkupplung im ausgelenkten Zustand nach Fig. 11,
- Fig. 13: eine schematische Darstellung einer kardanischen Doppelgelenkkupplung nach den Fig. 9 und Fig. 10 für Schienenfahrzeuge mit je einer Ritzelhohlwelle, die von der Zahnkupplung ausgeht und ein Ritzel aufweist, das mit dem antriebsseitigen Getriebe in Verbindung steht, und
- Fig. 14: eine doppelkardanische Keilpaket-Kupplung,

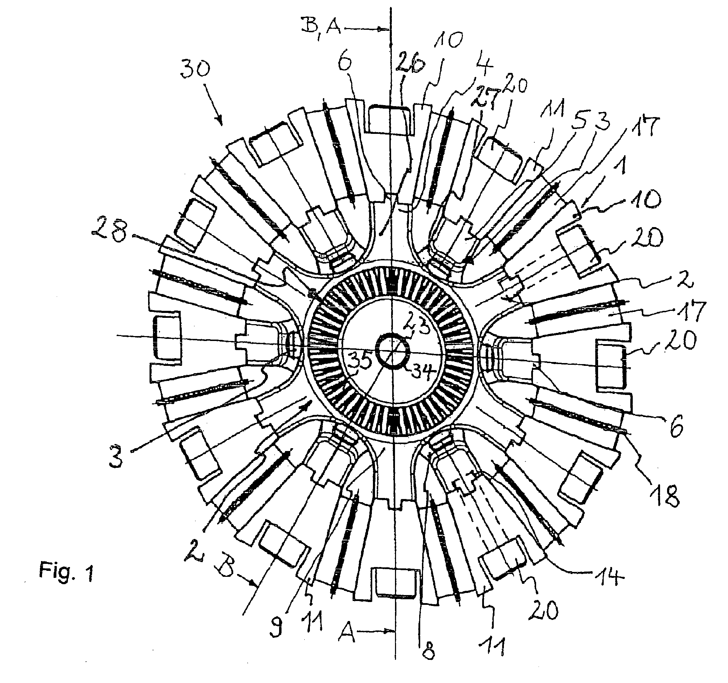

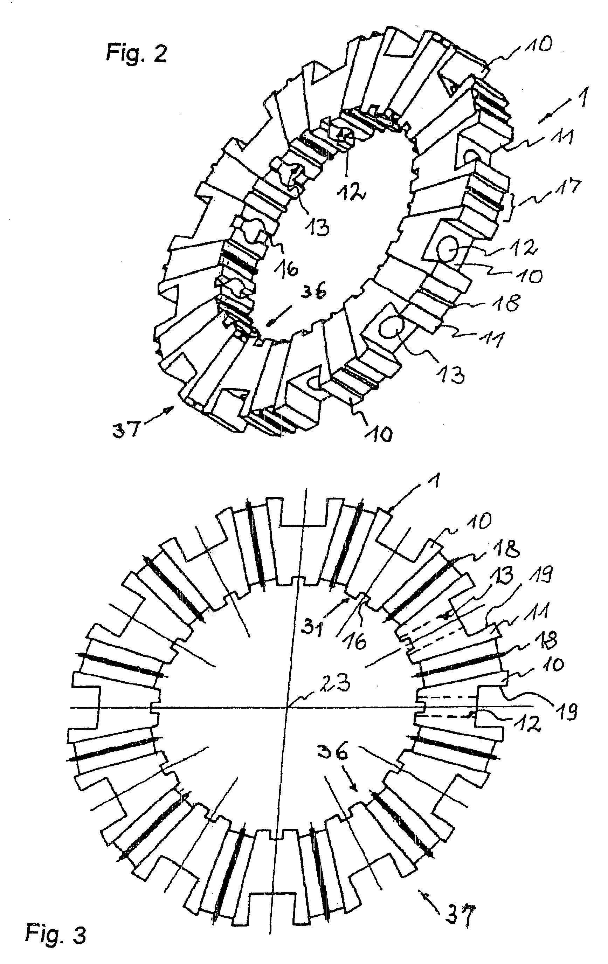

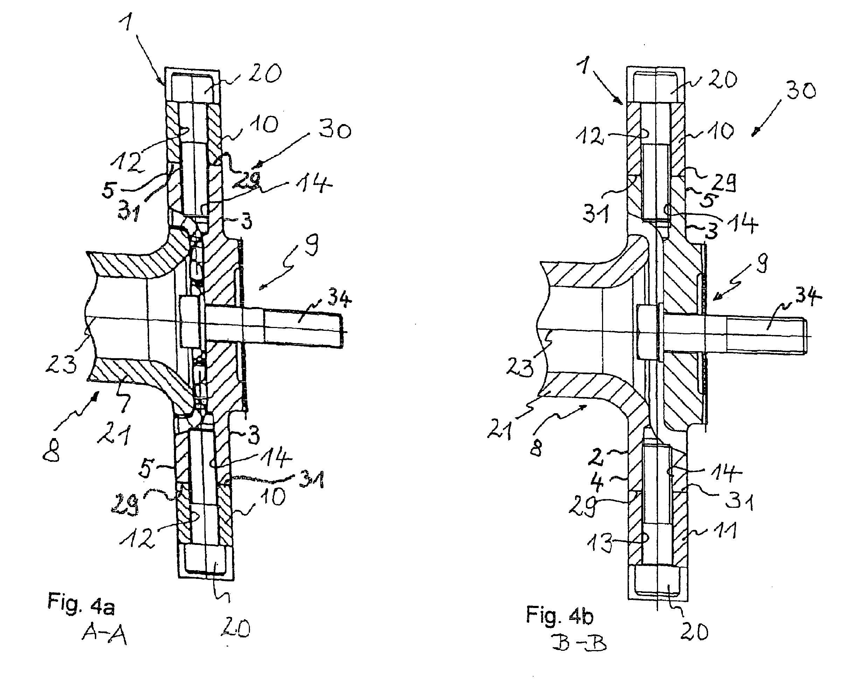

Im Folgenden werden die Fig. 1, Fig. 2 und Fig. 3 gemeinsam betrachtet.
In der in der Fig. 1 dargestellten Kupplung 30 mit Kupplungsring 1 auf zwei Kupplungsteilen 8, 9 - einem antriebsseitigen Kupplungsteil 8 und einem abtriebsseitigen Kupplungsteil 9 -, weisen die Kupplungsteile 8, 9 jeweils einen Stern 2, 3 mit Sternarmen 26, 27 und daran befindlichen Stemarmstimbereichen 4, 5 auf, wobei die beiden Sterne 2, 3 sich gegenüberliegend und axial zueinander winkelversetzt in der Kupplung 30 angeordnet und die axial zur jeweiligen Stemmitte 28 versetzten Stemarmstimbereiche 4, 5 mit jeweils mindestens einer Gewindebohrung 14 für Verschraubungen 20 des Kupplungsrings 1 versehen sind, wobei
- zum Kupplungsring 1 mehrere gemäß Fig. 2 und Fig. 3 zur Achse 23 des Kupplungsrings 1 gerichtete, ringumlaufend angeordnete, keilförmig geformte, metallische Befestigungselemente 10, 11 mit jeweils mindestens einer ausschließlich radial zur Ringachse 23 gerichteten durchgängigen Bohrung 12, 13 gehören, wobei die durchgängigen Bohrungen 12, 13 für mindestens eine ausschließlich radial gerichtete Verschraubung 20 zur Befestigung der Befestigungselemente 10, 11 an den radial zur Ringachse 23 gerichteten Gewindebohrungen 14 der sternwechselseitig befindlichen Stemarmstimbereiche 4, 5 gemäß Fig. 1 vorhanden, sind,
- die keilförmigen Befestigungselemente 10, 11 gemäß Fig. 4a und Fig. 4b jeweils eine axial verlaufende zur Ringachse 23 gerichtete Fläche 31 aufweisen, die jeweils mit einer axial verlaufenden Fläche 29 der Stemarmstimbereiche 4, 5 im Montagefall korrespondiert,
- zwischen den ringumlaufend benachbart angeordneten Befestigungselementen 10, 11 gemäß Fig. 1 jeweils ein elastisches Federelement 17 vorhanden ist, das an den jeweils benachbarten Befestigungselementen 10, 11 in einem Vulkanisierungsvorgang anvulkanisiert befestigt ist,
- wobei die ringumlaufend abwechselnde Anordnung der keilförmigen Befestigungselemente 10, 11 und der elastischen Federelemente 17 einen in einem Vulkanisierungsvorgang hergestellten Keilpaket-Kupplungsring 1 ausbildet, der als Ganzes auf die beiden sternwechselseitig axial versetzten Stemarmstimbereiche 4, 5 aufschraubbar ist,
- so dass der Kupplungsring 1 gemäß Fig. 2 und Fig. 3 einen elastisch ungeteilt ausgebildeten Keilpaket-Kupplungsring darstellt und eine einheitliche tangentiale Vorspannungserzeugung gestattet, wobei sich die tangentiale Vorspannungserzeugung gemäß Fig. 1 auf die zwei sich axial zueinander winkelversetzt gegenüberliegende Sterne 2, 3 der zwei Kupplungsteile 8, 9 bezieht.

Der in Fig. 2 und Fig. 3 ohne Kupplungsteile 8, 9 dargestellte Kupplungsring 1 für Kupplungen ist als einheitlicher, innerhalb der Befestigungselemente 10, 11 und innerhalb der Federelemente 17 ungeteilter und unsegmentierter Kupplungsring ausgebildet,
wobei
- zum Kupplungsring 1 mehrere zur Achse 23 des Kupplungsrings 1 gerichtete, ringumlaufend angeordnete, keilförmig geformte metallische Befestigungselemente 10, 11 mit jeweils einer ausschließlich radial zur Ringachse 23 gerichteten durchgängigen Bohrung 12, 13 gehören, wobei die durchgängigen Bohrungen 12, 13 für mindestens eine ausschließlich radial gerichtete, vom Ringaußenbereich 37 ausführbare Verschraubung zur Befestigung der Befestigungselemente 10, 11 auf in Fig. 1 gezeigte, zwei angepasste Kupplungsteile 8, 9 der Kupplung 30 zur Verbindung der beiden Kupplungsteile 8, 9 über den Kupplungsring 1 dienen,
- die keilförmigen Befestigungselemente 10, 11 des Kupplungsrings 1 am Ringinnenbereich 36 jeweils ein axial verlaufendes Profil 31 zur Ringachse 23 gerichtet aufweisen,
- zwischen den ringumlaufend benachbart angeordneten Befestigungselementen 10, 11 jeweils ein elastisches Federelement 17 vorhanden ist, das an den benachbarten Befestigungselementen 10, 11 in einem Vulkanisierungsvorgang anvulkanisiert befestigt ist,
- so dass eine ringumlaufend wechselweise Anordnung der metallischen keilförmigen Befestigungselemente 10, 11 und der elastischen Federelemente 17 einen in einem Vulkanisierungsvorgang hergestellten Keilpaket-Kupplungsring 1 zur Verbindung der beiden Kupplungsteile 8, 9 ausbildet.

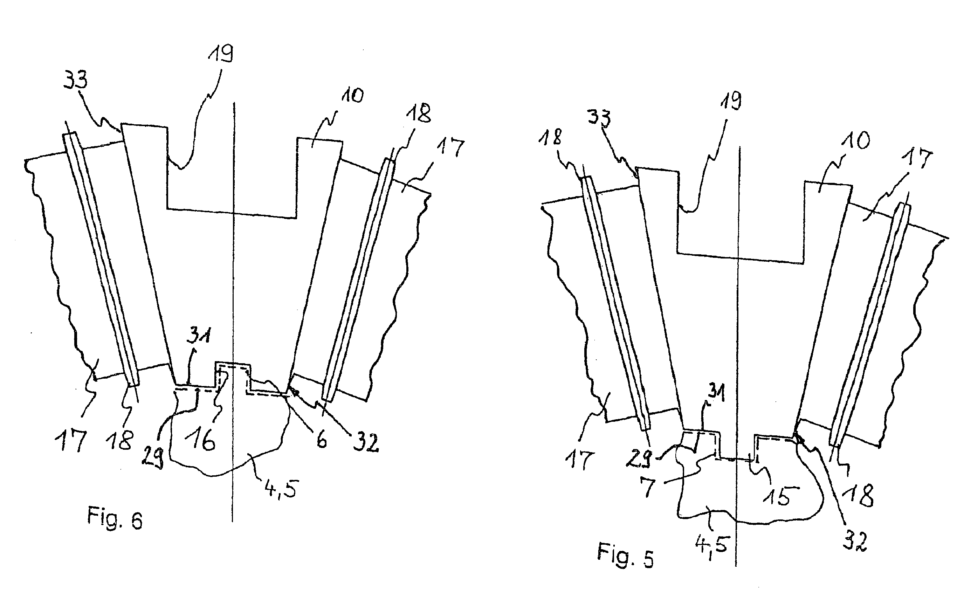

In Fig. 4a ist eine Schnittdarstellung A-A gemäß Fig. 1 des mit den Stemarmstimbereichen 5 des Sterns 3 teilweise verschraubten Kupplungsrings 1 und in Fig. 4b ist eine Schnittdarstellung B-B gemäß Fig. 1 desselben mit dem Stemarmstimbereich 4 des einen Sterns 2 und mit dem Sternarmstirnbereich 5 des anderen Sterns 3 verschraubten Kupplungsrings 1 dargestellt, wobei im Vergleich beider Schnitte A-A (längs durchgehender Schnitt) und B-B (abgewinkelt durchgehender Schnitt) die Winkelverschiebung zwischen dem einen Stern 2 des Kupplungsteils 8 und dem anderen Stern 3 des Kupplungsteils 9 in Fig. 4b abgebildet ist. Während dabei das Kupplungsteil 8 mit einer Antriebswelle 21 in Verbindung steht, ist das Kupplungsteil 9 mit einer Arretierschraube 34 und einer Stirnverzahnung 35 an der Abtriebswelle (nicht eingezeichnet) befestigt.
Die den Befestigungselementen 10, 11 des Kupplungsrings 1 angepassten, jeweils zu einem Stern 2, 3 gehörenden Stemarmstimbereiche 4, 5 stellen gemäß Fig. 5 und Fig. 6 Endbereiche der von einem zentralen Bereich 28 des Sterns 2, 3 ausgehenden Sternarme 26, 27, wie in Fig. 1 gezeigt, dar, wobei die Endbereiche eine zu den Befestigungselementen 10, 11 gerichtete Fläche 29 aufweisen, mit der eine berührende Verbindung zur Fläche 31 am keilförmig schmalen Endbereich 32 des keilförmigen Befestigungselementes 10, 11 herbeiführbar ist.

Die Stemarmstimbereiche 4, 5 der Sterne 2, 3 können jeweils eine axial gerichtete Fläche 29 mit Profil aufweisen, die vor der Verschraubung 20 unterhalb der Fläche 31 mit Profil am keilförmig schmalen Endbereich 32 des jeweiligen zugeordneten Befestigungselementes 10, 11 positioniert ist, wobei im Montagefall sich beide Flächen 29, 31 berühren.

Die Profile der Flächen 31 der Befestigungselemente 10, 11 und die Profile der Flächen 29 der Stemarmstimbereiche 4, 5 können korrespondierende zueinander form-schlüssige Ausbildungen sein.

Die Profile der Flächen 31 der Befestigungselemente 10, 11 können, wie in Fig. 6 gezeigt ist, eine Nut 16 oder, wie in Fig. 5 gezeigt ist, eine Feder 15 sein und die Profile der Flächen 29 der Stemarmstimbereiche 4, 5 können eine dazu formschlüssig passend korrespondierende Feder 6 in Fig. 6 oder Nut 7 in Fig. 5 sein.

Die Profile der Flächen 31 der Befestigungselemente 10, 11 können eine Kupplungsverzahnung (nicht eingezeichnet) in Form von Keilen oder von Zähnen sein und die Profile der Flächen 29 der Sternarmstimbereiche 4, 5 können eine dazu passende Kupplungsverzahnung darstellen.

Die Profile der Flächen 31 der Befestigungselemente 10, 11 und die Profile der Flä-5 chen 29 der Stemarmstimbereiche 4, 5 können korrespondierende zueinander kraftschlüssige Ausbildungen sein.

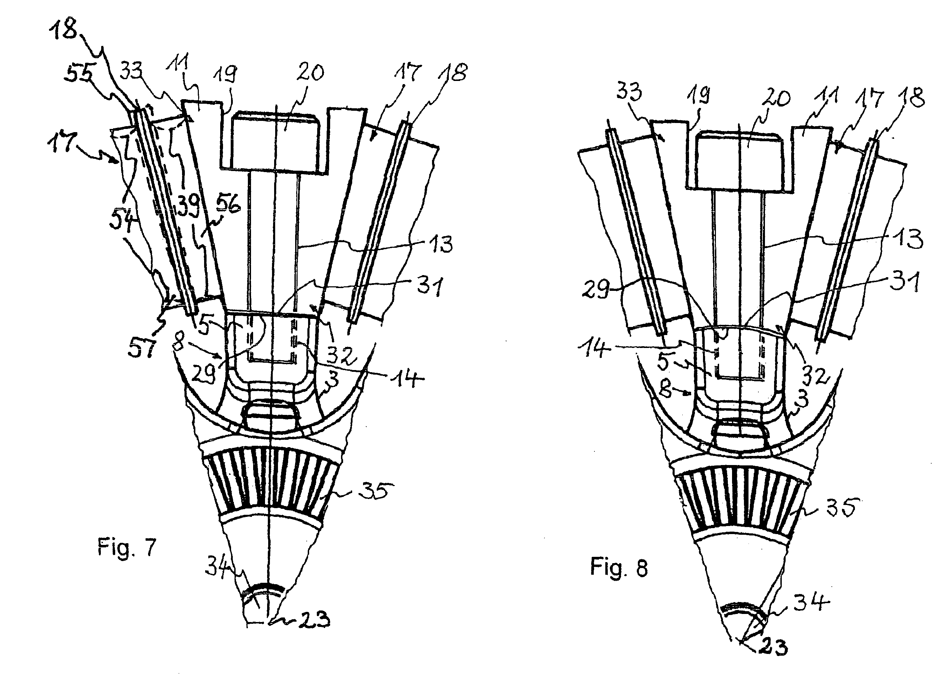

Die Profile der Flächen 31 der Befestigungselemente 10, 11 und die Profile der Flächen 29 der Sternarmstimbereiche 4, 5 können gemäß Fig. 7 als zueinander angepasste ebene Flächen oder gemäß Fig. 8 als zueinander angepasste gebogene Flächen ausgebildet sein, die sich im Montagefall berühren, wobei im Falle der gebogenen Flächen die Flächen 31, 29 in Richtung zum Ringinnenbereich 36 gebogen oder in Richtung zum Ringaußenbereich 37 gebogen sein können.

Durch die Verschraubungen 20 wird generell ein Kraftschluss zwischen dem Kupplungsring 1 und den Kupplungsteilen 8, 9 erreicht, der von den Formschlüssen (Feder, Nut) unterstützt wird. Im Allgemeinen besteht eine Mischform zwischen Kraftschluss und Formschluss im Bereich der Verbindung zwischen Kupplungsring 1 und den beiden der Kupplung 30 zugeordneten Kupplungsteilen 8, 9.

Alle metallischen Befestigungselemente 10, 11 können gemäß der Fig. 5 und der Fig. 6 sowie gemäß der Fig. 7 und Fig. 8 am keilförmig weiten Endbereich 33 vorzugsweise äußere Einlassungen/Aussparungen 19 jeweils in Form einer Versenkungsnut oder einer Senkbohrung für die radial gerichteten Verschraubungen 20 aufweisen.

Die Federelemente 17 können total aus Gummi bestehen. Die Federelemente 17 können, wie in Fig. 1 gezeigt ist, aber auch mindestens eine zur Ringachse 23 gerichtete ebene Stützplatte 18 aufweisen.
Die radial gerichteten Stützplatten 18 können federelementmittig angeordnet sein. Wie in Fig. 7 an einem Federelement 17 gezeigt ist, können die Stützplatten 18 nicht nur mit parallelen ebenen Flächen, sondern auch in einer Keilform 55 (gestrichelt) zur Ringachse 23 gerichtet ausgebildet sein. Außerdem können die Federelemente 17 radial und/oder axial zur Ringachse 23 gerichtet mit zumindest einer konkaven Taille ausgebildet sein, wobei in Fig. 7 zu beiden Seiten der Stützplatte 18 der jeweilige Teil 56, 57 des Federelements 17 mit einer axial zur Ringachse 23 gerichteten konkaven Taille 39 (gestrichelt) und konkaven Taille 54 (gestrichelt) ringinnen und ringaußen versehen ist. Ringseitliche konkave Taillen (nicht eingezeichnet) können radial zur Ringachse 23 gerichtet sein.

Mittels der Verschraubungen 20 können wechselweise, ausgehend von einem Befestigungselement 10 des Kupplungsrings 1, das Befestigungselement 10 mit dem Sternarmstimbereich 4 des einen Sterns 2 verbunden sein und dann das dem Befestigungselement 10 benachbarte Befestigungselement 11 mit dem zum Stemarmstimbereich 4 des einen Sterns 2 benachbarten Stemarmstimbereich 5 des anderen Sterns 3 verbunden sein, wobei danach wieder ein weiteres Befestigungselement 10 mit einem weiteren Sternarmstirnbereich 4 des einen Sterns 2 verbunden ist, usw., so dass der Kupplungsring 1 am Ringinnenbereich 36 auf den ineinander greifenden Kupplungsteilen 8, 9 radial aufgeschraubt ist.

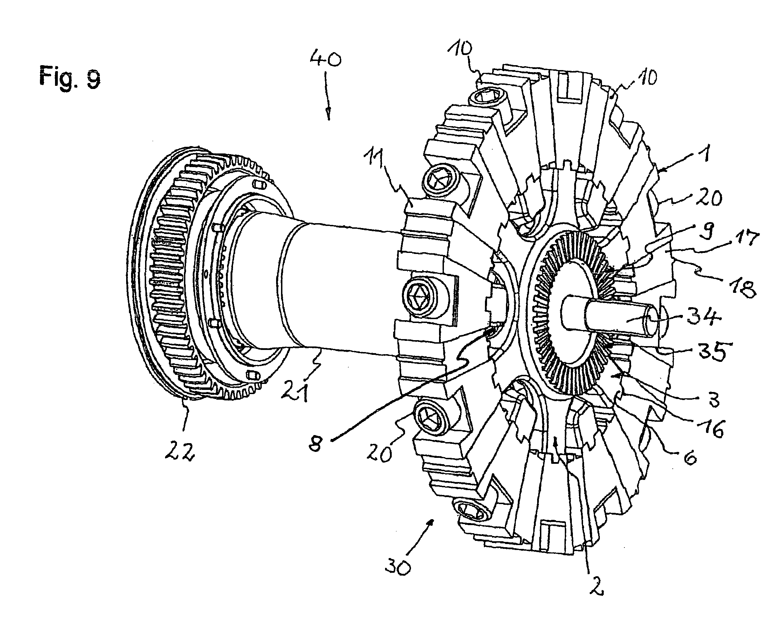

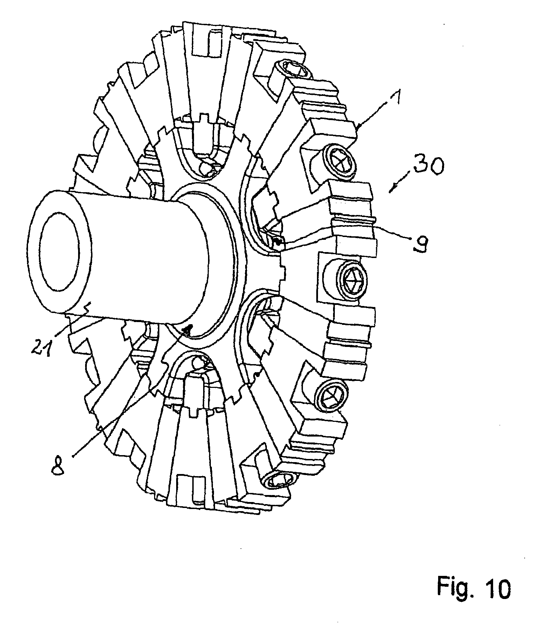

Die in Fig. 9 und Fig. 10 dargestellten Kupplungen 40 und 30 mit Kupplungsring 1 auf zwei Kupplungsteilen 8, 9 können Teil einer Doppelgelenkkupplung 40 sein, wobei in Fig. 9 eines der Kupplungsteile 8 mit einer über der Welle 21 angeschlossenen Zahnkupplung 22 mit Balligverzahnung in Verbindung steht.
In Fig. 10 ist dazu die einkardanische Keilpaket-Kupplung 30 mit dem erfindungsgemäßen Kupplungsring 1 sowie mit dem Anschluss des Kupplungsrings 1 über das Kupplungsteil 8 hin zur Welle 21 gezeigt.

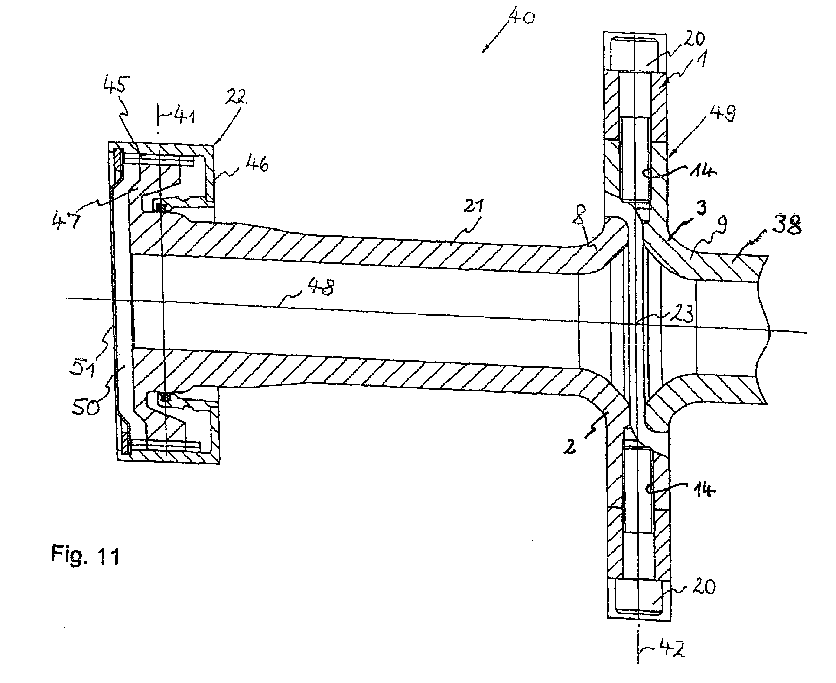

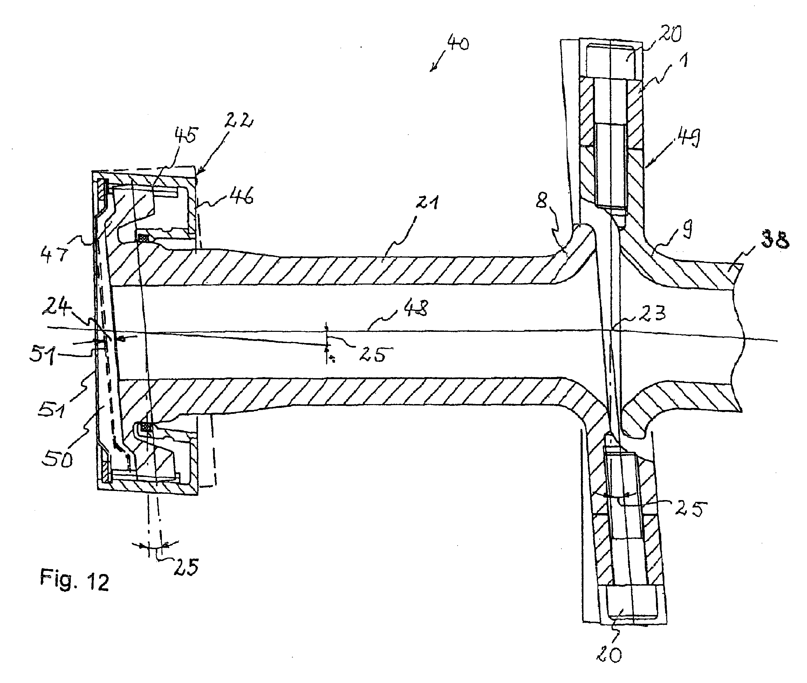

In der Fig. 11 ist die kardanische Doppelgelenkkupplung 40 mit zwei Gefenkebenen 41, 42 im nichtausgelenkten Ruhezustand und in Fig. 12 im ausgelenkten dynamischen Zustand dargestellt, wobei die kardanische Doppelgelenkkupplung 40 zwei Kupplungen 22, 49, die durch eine Welle 21 miteinander verbunden sind, enthält, wobei die eine Gelenkebene 41 einer Zahnkupplung 22 mit Balligverzahnung 45 mit winkligem und axialem Ausgleichsvermögen und die andere Gelenkebene 42 der drehsteifen, biegeelastischen Kupplung 49 mit dem Kupplungsring 1 zugeordnet sind. Die Kupplung 49 weist gegenüber der Kupplung 30 eine mit dem Kupplungsteil 9 verbundene Welle 38 auf.

Die Zahnkupplung 22 mit Balligverzahnung 45 weist eine tauschbare Hülse 46 mit Innenverzahnung und eine tauschbare Kupplungsnabe 47 mit dazu gehöriger Außenverzahnung auf, wobei die Welle 21 endbereichsseitig mit der möglichen tauschbaren Kupplungsnabe 47 verbunden ist, und wobei die drehsteife, biegeelastische Kupplung 49 eine Keilpaket-Kupplung mit dem erfindungsgemäßen elastischen ungeteilten Keilpaket-Kupplungsring 1 ist.

Die Zahnkupplung 22 mit Balligverzahnung 45 in den Fig. 11, Fig. 12 und Fig. 13 ist von der Hülse 46 umgeben, die mit einem Deckel 51 versehen ist, der eine Schmierung mit totaler Abdichtung nach außen ermöglicht, wobei sich das Schmieröl bzw.-fett hauptsächlich in einem Freiraum 50 zwischen der Zahnkupplungsnabe 47 und dem Deckel 51 bzw. der Hülse 46 befindet. Je nach Bedarf kann die Hülse 46 eine geschlossene Hülse sein.

Die Doppelgelenkkupplung 40 in den Fig. 11 und Fig. 12 enthält zumindest den erfindungsgemäßen Kupplungsring 1, der als einheitlicher, innerhalb der Befestigungselementen 10, 11 und innerhalb der elastischen Federelemente 17 ungeteilter und unsegmentierter Keilpaket-Kupplungsring ausgebildet ist und zur Vorspannungserzeugung auf zwei sich winkelversetzt gegenüberliegenden Sternen 2, 3 mit axial versetzten Stemarmstimbereichen 4, 5 mit jeweils mindestens einer Gewindebohrung 14 für Verschraubungen dient, wobei an den Stemarmstimbereichen 4, 5 jeweils ein zur Achse 23 des Kupplungsrings 1 gerichtetes axial verlaufendes Profil 6, 7 ausgebildet sind, wobei an den Sternen 2, 3 ein jeweils zugeordnetes antriebsseitiges Kupplungsteil 8 und ein abtriebsseitiges Kupplungsteil 9 angeordnet sind, wobei am Keilpaket-Kupplungsring 1
- mehrere zur Achse 23 des Kupplungsrings 1 keilförmig geformte metallischen Befestigungselemente 10, 11 mit jeweils einer ausschließlich radial zur Ringachse 23 gerichteten durchgängigen Bohrung 12, 13 vorhanden sind, wobei die durchgängigen Bohrungen 12, 13 für mindestens eine ausschließlich radial gerichtete Verschraubung 20 zur Befestigung an den radial zur Ringachse 23 gerichteten Gewindebohrungen 14 der sternwechselseitig befindlichen Sternarmstirnbereiche 4, 5 vorgesehen sind,
- die keilförmigen Befestigungselemente 10, 11 ein axial verlaufendes Profil 15, 16 zur Ringachse 23 gerichtet aufweisen, das jeweils mit dem Profil 6, 7 der Stemarmstimbereiche 4, 5 im Montagefall arretierend korrespondiert,
- zwischen den ringumlaufend benachbarten Befestigungsetementen 10, 11 jeweils ein elastisches Federelement 17 vorhanden ist, das an den benachbarten Befestigungselementen 10, 11 in einem Vulkanisierungsvorgang anvulkanisiert befestigt ist,
- so dass eine ringumlaufend wechselweise Anordnung der metallischen Befestigungselemente 10, 11 und der elastischen Federelemente 17 einen in einem Vulkanisierungsvorgang hergestellten Keilpaket-Kupplungsring 1 ausbildet, der als Ganzes auf die stemineinander greifenden, axial versetzten Stemarmstimbereiche 4, 5 aufschraubbar ist.

Sind die Befestigungselemente 10, 11 des Kupplungsrings 1 keilförmig zur Ringachse 23 gerichtet ausgebildet, so wird der Kupplungsring 1 als Keilpaket-Kupplungsring bezeichnet.
Der Kupplungsring 1 kann aber auch eine ringumlaufende Kombination von Befestigungselementen 10, 11 und anvulkanisierten Federelementen 17 im Wechsel aufweisen, wobei die Befestigungselemente 10, 11 und die Federelemente 17 mit verschiedenen aber zueinander angepassten Formen versehen sind.

Die elastische Keilpaket-Kupplung 30 mit dem Keilpaket-Kupplungsring 1 in Fig. 10 stellt eine einkardanische Keilpaketring-Kupplung dar.

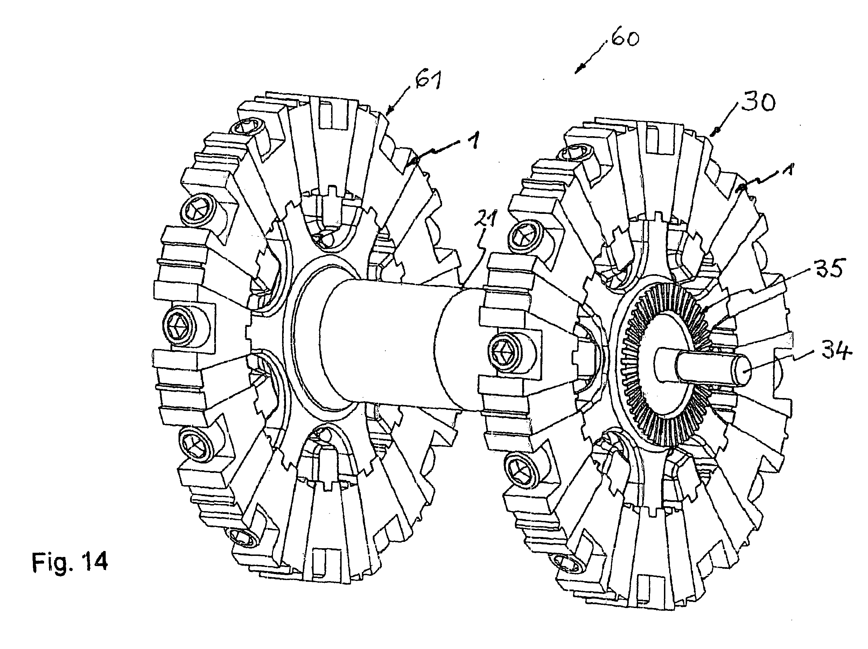

Zwei elastische Keilpaket-Kupplungen 30, 61 können gemäß Fig. 14 über die Verbindung mit einer Welle 21 als eine doppelkardanische Keilpaket-Kupplung 60 ausgebildet sein.

Des Weiteren kann die Zahnkupplung 22 mit Balligverzahnung 45 durch eine Membrankupplung oder Ringscheibenkupplung ersetzt sein.

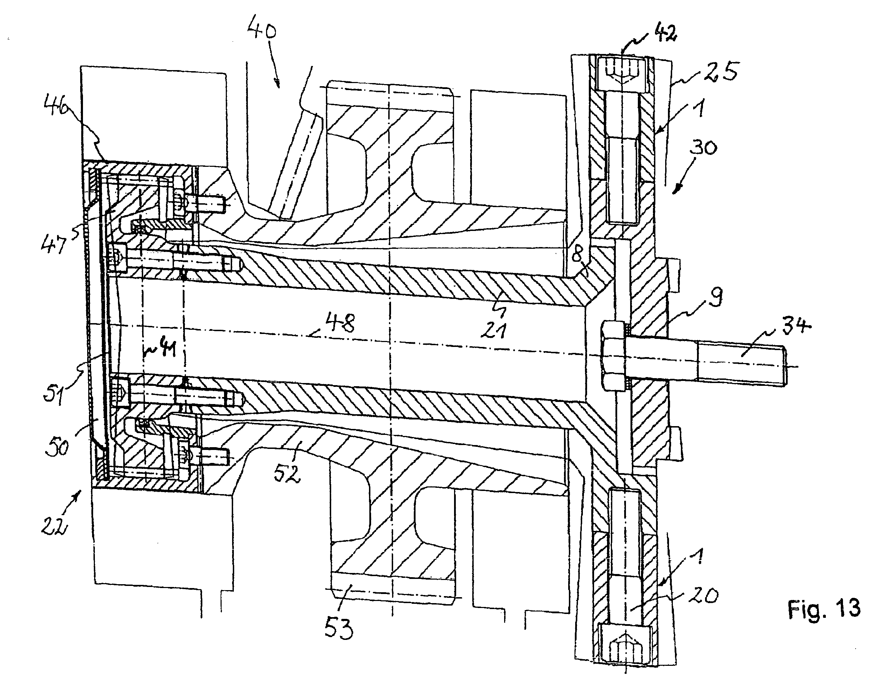

Die in Fig. 13 gezeigte Anordnung der beiden Kupplungen 22, 30 in ihren Gelenkebenen 41, 42 kann im Bereich von Radsätzen von Schienenfahrzeugen sowohl außerhalb als auch innerhalb der Radsätze der Schienenfahrzeuge angebracht sein.

In Zusammenfassung ist die Kupplung mit Kupplungsring 1 gemäß der Fig. 11, 12, 13 zumindest ein Teil einer Doppelgelenkkupplung 40, wobei gemäß der Fig. 11, 12, 13 zumindest eines der Kupplungsteile 8 oder 9 mit einer über eine Welle 21 angeschlossenen Zahnkupplung 22 mit Balligverzahnung 45 in Verbindung stehen oder eine Doppelgelenkkupplung 60 gemäß Fig. 14 mit einer über eine Welle 21 angeschlossenen Kupplung 30, 61 mit dem gleichen Kupplungsring der dem Kupplungsring 1 entsprechenden Bauart oder mit einer anderen über eine Welle 21 angeschlossenen Kupplung mit kardanischen Verlagerungsmöglichkeiten in Verbindung steht.

Als Verwendung des elastischen ungeteilten Kupplungsrings 1 für eine Doppelgelenkkupplung 40 kann, wie in Fig. 9 gezeigt ist, der Kupplungsring 1 mit einem Kupplungsteil 8 in Verbindung stehen, wobei das Kupplungsteil 8 der Kupplung 30 mit einer über eine Welle 21 angeschlossenen Zahnkupplung 22 mit Balligverzahnung verbunden ist.

Die Vorteile des erfindungsgemäßen elastischen ungeteilten Kupplungsrings 1 mit einheitlicher tangentialer Vorspannungserzeugung auf zwei Kupplungsteilen 8, 9 in einer Kupplung 30 bestehen in einem durch die gleichzeitige Vulkanisierung aller Federelemente 17 an die benachbarten Befestigungselemente 10, 11 erzeugten gleichmäßigen Verlagerungsausgleich sowie insbesondere einer Einsparung einer Montagevorrichtung zur gleichmäßigen Vorspannungserzeugung auf den Sternen 2, 3 der Kupplungsteile 8, 9.

Im Folgenden wird die Funktionsweise der Doppelgelenkkupplung 40 anhand der Fig. 12 näher erläutert:

In Fig. 12 ist die kardanische Doppelgelenkkupplung 40 im dynamischen Zustand mit einer axialen Verlagerung 24 und mit einer winkligen Verlagerung 25 dargestellt. Bei der axialen Verlagerung 24 der Zahnkupplung 22 wird die Zahnkupplung 22 in Richtung zur Keilpaket-Kupplung 49 verschoben, wobei die Zahnkupplungsnabe 47 den Freiraum 50 im Bereich des Deckels 51 bzw. der Hülse 46 nutzt.
Bei der gleichzeitig auftretenden, winkligen Verlagerung 25 kippt die Welle 21 aus der Kupplungsachse 48, wodurch der Keilpaket-Kupplungsring 1 die winklige Verlagerung 25 abfedert.
Mit der erfindungsgemäßen Doppelgelenkkupplung 40 können die Vorteile - Dauerfestigkeit und Wartungsarmut sowie geringer Platzbedarf plus hohes winkliges und axiales Verlagerungsvermögen und Schmierung an beherrschbaren Stellen im Radsatzbereich -, der beiden unterschiedlichen Kupplungen 22, 49 herausgearbeitet und gezielt genutzt werden.

Z.B. kann bei einem außen befindlichen Einzelradantrieb für eine Straßenbahn die Keilpaket-Kupplung 49 an den Stellen zwischen Rad und Getriebe, an denen wenig Platz vorhanden ist, und unmittelbar über der Straße, an denen eine aggressive Umgebung vorhanden ist, angeordnet sein. Mit der gegebenen Wartungsarmut ist diese Anordnung der Kupplung 49 in dieser Umgebung sehr zweckmäßig. Mit der erfindungsgemäßen Doppelgelenkkupplung 40 wird die Möglichkeit eröffnet, Antriebe für Schienenfahrzeuge den umweltlichen und technischen Gegebenheiten umfassender und flexibler anzupassen.

Dagegen kann die Zahnkupplung 22 mit Balligverzahnung 45 im geschützten Bereich des Getriebes platziert sein, in dem genügend Platz zur Anpassung und Verschiebung vorhanden ist. Die Zahnkupplung 22 mit Balligverzahnung 45 kann dort durch den Deckel 51 bzw. die Hülse 46 abgedichtet sein, der/die nicht bewegt wird und somit eine Abdichtung nach außen gewährleistet.

Die Doppelgelenkkupplung 40 eröffnet die Möglichkeit, dass eine einfache Tauschbarkeit von Kupplungselementen sowohl im Bereich der Zahnkupplung 22 mit Balligverzahnung 45 als auch im Bereich der Keilpaket-Kupplung 49 gewährleistet werden kann. Außerdem werden eine verbesserte Dämpfung, eine elektrische Isolation sowie eine verbesserte Flexibilität in den Verlagerungen 24, 25 erreicht.

In Fig. 13 ist als Anwendung der Doppelgelenkkupplung 40 eine schematische Darstellung der Doppelgelenkkupplung 40 nach den Fig. 11 und Fig. 12 für Schienenfahrzeuge mit je einer Ritzelhohlwelle 52 gezeigt, die von der zeichnerisch im Detail vervollständigten Zahnkupplung 22 ausgeht, die Welle 21 umgibt und ein Ritzel 53 aufweist, das mit dem antriebsseitigen Getriebe (nicht gezeichnet) in Verbindung steht. Im dynamischen Fall ist auch hier die winklige Verlagerung 25 vorhanden.

In Fig. 14 ist eine doppelkardanische Keilpaket-Kupplung 60 aus der Keilpaket-Kupplung 30 und einer weiteren Keilpaket-Kupplung 61 dargestellt, wobei die vorgenannten Erläuterungen zur Keilpaket-Kupplung 30 für die weitere Keilpaket-Kupplung 61 zutreffend analog sein können.

Eine andere Verwendung des Kupplungsrings 1 in Doppelgelenkkupplungen kann auch derart ausgebildet sein, dass anstelle der Zahnkupplungen in den Doppelgelenkkupplungen Membrankupplungen und Ringscheibenkupplungen eingesetzt sind.

Das Wesen der Erfindung ermöglicht eine Befestigung des Kupplungsrings 1 durch die ausschließlich radiale Verschraubung 20 des Kupplungsrings 1 auf die unterhalb der Befestigungselemente 10, 11 befindlichen und mit radial gerichteten Gewindebohrungen 14 ausgebildeten, gegenüber den Stemmitten axial versetzten Stemarmstimbereiche 4, 5 der Kupplungssteme 2, 3 gegeben. Außerdem unterstützen die ausgeprägten korrespondierenden Profile 29, 31 die Arretierung des Kupplungsrings 1 an den Sternarmstirnbereichen 4, 5 der Kupplungsteile 8, 9.

Im Übrigen können die Befestigungselemente 10, 11 aus festem Material bestehen, insbesondere metallisch oder aus einer anderen festen Substanz/Stoff/Werkstoff ausgebildet sein.

Die Befestigungselemente 10, 11 des Kupplungsrings 1 können mit verschiedenen Formen ebenso wie die elastischen Federelemente 17 mit verschiedenen, den Formen der Befestigungselemente 10, 11 angepassten Formen versehen sein.

Die Befestigungselemente 10, 11 können im Querschnitt zumindest auf zwei sich gegenüberliegenden Seiten von ringaußen nach ringinnen gerichtet tailliert und/oder profiliert sein.

Die Befestigungselemente 10, 11 können zur Ringachse 23 keilförmig geformt sein, wobei der keilförmig schmale Endbereich 32 ringinnen und der keilförmig weite Endbereich 33 ringaußen sind.

Die Federelemente 17 bestehen aus elastischem Material vorzugsweise aus Gummi.

Die elastischen Federelemente 17 können andererseits auch mindestens eine Stützplatte jeweils in topographischer Ausbildungsform, z.B. flächenbombiert und nicht ausschließlich zur Ringachse 23 gerichtet zwischen jeweils zwei Federelementen eingebettet enthalten.

Die Federelemente 17 oder Teile 56, 57 davon können mit zumindest einer radial und/oder axial zur Ringachse 23 gerichteten konkaven Taille 39, 54 ausgebildet sein.

### Bezugszeichenliste

- 1: Kupplungsring
- 2: Erster Stern
- 3: Zweiter Stern
- 4: Erster Sternarmstirnbereich
- 5: Zweiter Sternarmstirnbereich
- 6: Feder des Sternarmstirnbereiches
- 7: Nut des Sternarmstirnbereiches
- 8: Erstes Kupplungsteil
- 9: Zweites Kupplungsteil
- 10: Erster Befestigungselement
- 11: Zweiter Befestigungselement
- 12: Erste Bohrung
- 13: Zweite Bohrung
- 14: Gewindebohrung
- 15: Feder des Befestigungselementes
- 16: Nut des Befestigungselementes
- 17: Federelement
- 18: Radial gerichtete Stützplatte
- 19: Versenkungsnut/Senkbohrung
- 20: Radial gerichtete Verschraubung
- 21: Welle
- 22: Zahnkupplung mit Balligverzahnung
- 23: Achse des Kupplungsrings
- 24: Axiale Verlagerung
- 25: Winklige Verlagerung
- 26: Sternarm des einen Sterns
- 27: Sternarm des anderen Sterns
- 28: Zentraler Bereich eines Sterns/Sternmitte
- 29: Fläche des Sternarmstirnbereichs/Profil
- 30: Einkardanische Keilpaket-Kupplung
- 31: Fläche des Befestigungselements/Profil
- 32: keilförmig schmaler Endbereich
- 33: keilförmig weiter Endbereich
- 34: Arretierschraube
- 35: Stirnverzahnung
- 36: Ringinnenbereich
- 37: Ringaußenbereich
- 38: zweite Welle
- 39: Taille eines Federelements/Teils des Federelements
- 40: Doppelgelenkkupplung
- 41: Erste Gelenkebene
- 42: Zweite Gelenkebene
- 45: Balligverzahnung
- 46: Hülse
- 47: Zahnkupplungsnabe
- 48: Kupplungsachse
- 49: Elastische Keilpaket-Kupplung mit Wellenanschluss
- 50: Freiraum
- 51: Deckel
- 52: Ritzelhohlwelle
- 53: Ritzel
- 54: Taille eines Federelements/Teils des Federelements
- 55: Keilform einer Stützplatte
- 56: Teil eines Federelements
- 57: Teil eines Federelements
- 60: Doppelkardanische Keilpaket-Kupplung
- 61: Elastische Keilpaket-Kupplung

## Patentansprüche

1. Kupplung (30, 49, 61; 40, 60) mit Kupplungsring (1) auf zwei Kupplungsteilen (8, 9), wobei die Kupplungsteile (8, 9) jeweils einen Stern (2, 3) mit Stemarmen (26, 27) und daran befindlichen Stemarmstimbereichen (4, 5) aufweisen, wobei die beiden Sterne (2, 3) sich gegenüberliegend und axial zueinander winkelversetzt angeordnet und die Sternarmstirnbereiche (4, 5) mit jeweils mindestens einer Gewindebohrung (14) für Verschraubungen (20) versehen sind,
wobei
- zum Kupplungsring (1) mehrere zur Achse (23) des Kupplungsrings (1) gerichtete, ringumlaufend angeordnete Befestigungselemente (10, 11) mit jeweils mindestens einer ausschließlich radial zur Ringachse (23) gerichteten, durchgängigen Bohrung (12, 13) gehören, wobei die durchgängigen Bohrungen (12, 13) für mindestens eine ausschließlich radial gerichtete Verschraubung (20) zur Befestigung der Befestigungselemente (10, 11) an den radial zur Ringachse (23) gerichteten Gewindebohrungen (14) der sternwechselseitig befindlichen Sternarmstirnbereiche (4, 5) vorhanden sind,
- zwischen den ringumlaufend benachbart angeordneten Befestigungselementen (10, 11) jeweils ein elastisches Federelement (17) vorhanden ist,
- die Befestigungselemente (10, 11) des Kupplungsrings (1) jeweils eine axial verlaufende zur Ringachse (23) gerichtete Fläche (31) aufweisen, die jeweils mit einer axial verlaufenden Fläche (29) der Sternarmstirnbereiche (4, 5) im Montagefall korrespondiert,
**dadurch gekennzeichnet,**
**dass**
- die den Befestigungselementen (10, 11) des Kupplungsrings (1) angepassten, jeweils zu einem Stern (2, 3) gehörenden Sternarmstirnbereiche (4, 5) Endbereiche der von einem zentralen Bereich (28) des Sterns (2, 3) ausgehenden Sternarme (26, 27) darstellen, wobei die Endbereiche eine zu den Befestigungselementen (10, 11) gerichtete Fläche (29) aufweisen, mit der eine berührende Verbindung zur Fläche (31) am inneren Endbereich (32) des jeweiligen Befestigungselementes (10,11) vorhanden ist,
- wobei die ringumlaufend abwechselnde Anordnung der Befestigungselemente (10, 11) und der elastischen Federelemente (17), die an den jeweils benachbarten Befestigungselementen (10, 11) in einem gleichzeitig durchgeführten Vulkanisierungsvorgang anvulkanisiert befestigt sind, einen in dem gleichzeitig durchgeführten Vulkanisierungsvorgang hergestellten Kupplungsring (1) ausbildet, der als Ganzes auf die beiden axial versetzten Sternarmstirnbereiche (4, 5) aufgeschraubt ist,
- so dass der Kupplungsring (1) einen elastischen, ungeteilt ausgebildeten Kupplungsring darstellt und eine einheitliche tangentiale Vorspannungserzeugung gestattet, wobei sich die tangentiale Vorspannungserzeugung auf die zwei sich axial zueinander winkelversetzt gegenüberliegende Sterne (2, 3) der zwei Kupplungsteile (8, 9) bezieht.

2. Kupplung nach Anspruch 1,
**dadurch gekennzeichnet,**
**dass** mittels der Verschraubungen (20) wechselweise, ausgehend von einem Befestigungselement (10) des Kupplungsrings (1), das Befestigungselement (10) mit dem Sternarmstirnbereich (4) des einen Sterns (2) verbindbar ist und dann das dem Befestigungselement (10) benachbarte Befestigungselement (11) mit dem zum Sternarmstirnbereich (4) des einen Sterns (2) benachbarten Sternarmstirnbereich (5) des anderen Sterns (3) verbindbar ist, wobei danach wieder ein weiteres Befestigungselement (10) mit einem weiteren Stemarmstimbereich (4) des einen Sterns (2) verbindbar ist, so dass der Kupplungsring (1) an allen Sternarmstirnbereichen (4, 5) ringumlaufend auf den Kupplungsteilen (8, 9) aufgeschraubt ist.

3. Kupplung nach Anspruch 1,
**dadurch gekennzeichnet,**
**dass** die Befestigungselemente (10,11) des Kupplungsrings (1) keilförmig geformt und metallisch ausgebildet sind.

4. Kupplung nach Anspruch 1,
**dadurch gekennzeichnet,**
**dass** die Befestigungselemente (10, 11) des Kupplungsrings (1) mit verschiedenen Formen ebenso wie die elastischen Federelemente (17) versehen sind.

5. Kupplung nach Anspruch 1,
**dadurch gekennzeichnet,**
**dass** die Profile der Flächen (31) der Befestigungselemente (10,11) und die Profile der Flächen (29) der Sternarmstirnbereiche (4, 5) korrespondierende zueinander formschlüssige Ausbildungen sind.

6. Kupplung nach Anspruch 5,
**dadurch gekennzeichnet,**
**dass** die Profile der Flächen (31) der Befestigungselemente (10,11) eine Nut (16) oder eine Feder (15) und die Profile der Flächen (29) der Sternarmstirnbereiche (4, 5) eine dazu formschlüssig passend korrespondierende Feder (6) oder Nut (7) sind.

7. Kupplung nach Anspruch 5,
**dadurch gekennzeichnet,**
**dass** die Profile der Flächen (31) der Befestigungselemente (10, 11) eine Kupplungsverzahnung in Form von Keilen oder von Zähnen sind und die Profile der Flächen (29) der Sternarmstirnbereiche (4, 5) eine dazu passende Kupplungsverzahnung darstellen.

8. Kupplung nach Anspruch 1,
**dadurch gekennzeichnet,**
**dass** die Profile der Flächen (31) der Befestigungselemente (10,11) und die Profile der Flächen (29) der Sternarmstirnbereiche (4, 5) korrespondierende zueinander kraftschlüssige Ausbildungen sind.

9. Kupplung nach Anspruch 8,
**dadurch gekennzeichnet,**
**dass** die Sternarmstirnbereiche (4, 5) der Sterne (2, 3) jeweils eine axial gerichtete Fläche (29) mit Profil aufweisen, die vor der Verschraubung (20) unterhalb der Fläche (31) mit Profil am keilförmig schmalen Endbereich (32) des jeweiligen Befestigungselementes (10, 11) positioniert ist, wobei im Montagefall sich beide Flächen (29, 31) berühren und den Kraftschluss stützen.

10. Kupplung nach Anspruch 8,
**dadurch gekennzeichnet,**
**dass** die Profile der Flächen (31) der Befestigungselemente (10, 11) und die Profile der Flächen (29) der Sternarmstirnbereiche (4, 5) zueinander angepasste ebene oder zueinander angepasste gekrümmte oder angepasste topografische Flächen sind, die sich im Montagefall berühren und den Kraftschluss stützen.

11. Kupplung nach Anspruch 8,
**dadurch gekennzeichnet,**
**dass** mittels Stift/en und Passschraube/n die Befestigungselemente (10, 11) an den Stemarmstimbereichen (4, 5) gehaltert sind.

12. Kupplung nach den Ansprüchen 1 und 6 bis 11,
**dadurch gekennzeichnet,**
**dass** eine Mischform von Kraftschluss und Formschluss im Bereich der Verbindung zwischen Kupplungsring (1) und den beiden der Kupplung (30, 49, 61; 40, 60) zugeordneten Kupplungsteilen (8, 9) besteht.

13. Kupplung nach Anspruch 3,
**dadurch gekennzeichnet,**
**dass** alle Befestigungselemente (10, 11) an ihrem keilförmig weiten Endbereich (33) vorzugsweise äußere Einlassungen/Aussparungen (19) jeweils in Form einer Versenkungsnut oder einer Senkbohrung für die radial gerichteten Verschraubungen (20) aufweisen.

14. Kupplung nach Anspruch 1,
**dadurch gekennzeichnet,**
**dass** die Federelemente (17) aus elastischem Material bestehen.

15. Kupplung nach Anspruch 14,
**dadurch gekennzeichnet,**
**dass** die Federelemente (17) mindestens eine zur Ringachse (23) gerichtete Stützplatte (18) aufweisen.

16. Kupplung nach Anspruch 1,
**dadurch gekennzeichnet,**
**dass** der Kupplungsring (1) eine Kombination von Befestigungselementen und anvulkanisierten Federelementen aufweist, wobei die Befestigungselemente mit verschiedenen Formen ebenso wie die Federelemente versehen sind.

17. Kupplung nach den Ansprüchen 1 bis 16,
**dadurch gekennzeichnet,**
**dass** die Kupplung (30) mit Kupplungsring (1) zumindest ein Teil einer Doppelgelenkkupplung (40, 60) ist, wobei zumindest eines der Kupplungsteile (8; 9) mit einer über eine Welle (21) angeschlossenen Zahnkupplung (22) mit Balligverzahnung (45) oder mit einer über eine Welle (21) angeschlossenen Kupplung (30, 49, 61) mit dem gleichen Kupplungsring der dem Kupplungsring (1) entsprechenden Bauart oder mit einer anderen über eine Welle (21) angeschlossenen Kupplung mit kardanischen Verlagerungsmöglichkeiten in Verbindung steht.

18. Kupplung nach Anspruch 17,
**dadurch gekennzeichnet,**
**dass** sie in einer Doppelgelenkkupplung (40) mit zwei Gelenkebenen (41, 42), die zwei Kupplungen, die durch eine Welle (21) miteinander verbunden sind, enthält, eingesetzt ist,
wobei die eine Gelenkebene (41) einer Zahnkupplung (22) mit Balligverzahnung (45) mit winkligem und axialem Ausgleichsvermögen zugeordnet ist, wobei die Zahnkupplung (22) mit Balligverzahnung (45) eine Hülse (46) mit Innenverzahnung und eine Kupplungsnabe (47) mit dazu gehöriger Außenverzahnung aufweist, wobei die Welle (21) endbereichsseitig mit der Kupplungsnabe (47) verbunden ist, und wobei die andere Gelenkebene (42) der Kupplung (30, 49) mit dem Kupplungsring (1) zugeordnet ist.

19. Kupplung nach Anspruch 3,
**dadurch gekennzeichnet,**
**dass** der Kupplungsring (1) als einheitlicher, zumindest innerhalb von Befestigungselementen (10, 11) ungeteilter und unsegmentierter Kupplungsring ausgebildet ist und zur Vorspannungserzeugung auf zwei sich winkelversetzt gegenüberliegenden Sternen (2, 3) mit axial versetzten Sternarmstirnbereichen (4, 5) mit jeweils mindestens einer Gewindebohrung (14) für Verschraubungen dient, wobei an den Sternarmstirnbereichen (4, 5) jeweils ein zur Achse (23) des Kupplungsrings (1) gerichtetes axial verlaufendes Profil (29, 6, 7) ausgebildet sind, wobei den Sternen (2, 3) jeweils ein Kupplungsteil (9, 8) zugeordnet ist, und eine Keilpaket-Kupplung (30, 49, 61) vorhanden ist,
wobei die keilförmigen Befestigungselemente (10, 11) ein axial verlaufendes Profil (15, 16) zur Ringachse (23) gerichtet aufweisen, das jeweils mit dem Profil (6, 7) der Sternarmstirnbereiche (4, 5) im Montagefall arretiert korrespondiert.

20. Kupplung nach Anspruch 19,
**dadurch gekennzeichnet,**
**dass** die elastische Keilpaket-Kupplung (30) mit dem Keilpaket-Kupplungsring (1) eine einkardanische Keilpaketring-Kupplung darstellt.

21. Kupplung nach Anspruch 19,
**dadurch gekennzeichnet,**
**dass** zwei elastische Keilpaket-Kupplungen (30, 61) über die Verbindung mit einer Welle (21) als eine doppelkardanische Keilpaket-Kupplung (60) ausgebildet sind.

22. Kupplung nach Anspruch 20,
**dadurch gekennzeichnet,**
**dass** die elastische Keilpaket-Kupplung (30) mit einer Zahnkupplung (22) mit Balligverzahnung (45) zu einer kardanischen Doppelgelenkkupplung (40) ausgebildet ist.

23. Kupplung nach Anspruch 22,
**dadurch gekennzeichnet,**
**dass** die Zahnkupplung (22) mit Balligverzahnung (45) durch eine Membrankupplung oder Ringscheibenkupplung ersetzt ist.

24. Kupplung nach Ansprüchen 1 bis 23,
**dadurch gekennzeichnet,**
**dass** die Anordnung der beiden Kupplungen (22, 49) in ihren Gelenkebenen (41, 42) im Bereich von Radsätzen von Schienenfahrzeugen sowohl außerhalb als auch innerhalb der Radsätze der Schienenfahrzeuge angebracht ist.

25. Kupplungsring für Kupplungen nach den Ansprüchen 1 bis 24,
**dadurch gekennzeichnet,**
**dass** der Kupplungsring (1) als einheitlicher, zumindest innerhalb von Befestigungselementen (10, 11) ungeteilter und unsegmentierter Kupplungsring ausgebildet ist, wobei
- zum Kupplungsring (1) mehrere zur Achse (23) des Kupplungsrings (1) gerichtete, ringumlaufend angeordnete Befestigungselemente (10, 11) mit jeweils einer ausschließlich radial zur Ringachse (23) gerichteten durchgängigen Bohrung (12, 13) gehören, wobei die durchgängigen Bohrungen (12, 13) für mindestens eine ausschließlich radial gerichtete, vom Ringaußenbereich (37) aus ausführbare Verschraubung (20) zur Befestigung der Befestigungselemente (10, 11) auf zwei angepasste Kupplungsteile (8, 9) zur Verbindung der beiden Kupplungsteile (8, 9) über den Kupplungsring (1) dienen,
- die Befestigungselemente (10, 11) des Kupplungsrings (1) am Ringinnenbereich (36) jeweils ein axial verlaufendes Profil zur Ringachse (23) gerichtet aufweisen,
- zwischen den ringumlaufend benachbarten Befestigungselementen (10, 11) jeweils ein elastisches Federelement (17) vorhanden ist, das an den benachbarten Befestigungselementen (10, 11) in einem gleichzeitig durchgeführten Vulkanisierungsvorgang anvulkanisiert befestigt ist,
- so dass eine ringumlaufend wechselweise Anordnung der Befestigungselemente (10, 11) und der elastischen Federelemente (17) einen in dem gleichzeitig durchgeführten Vulkanisierungsvorgang hergestellten Kupplungsring (1) darstellt, der als Ganzes auf zwei angepasste Kupplungsteile (8, 9) zur Verbindung der beiden Kupplungsteile (8, 9) radial aufgeschraubt ist.

26. Kupplungsring nach Anspruch 25,
**dadurch gekennzeichnet,**
**dass** die Befestigungselemente (10, 11) aus festem Material bestehen, insbesondere metallisch ausgebildet sind.

27. Kupplungsring nach Anspruch 25 oder 26,
**dadurch gekennzeichnet,**
**dass** die Befestigungselemente (10, 11) mit verschiedenen Formen ebenso wie die elastischen Federelemente (17) mit verschiedenen, den Formen der Befestigungselemente (10, 11) angepassten Formen versehen sind.

28. Kupplungsring nach Anspruch 27,
**dadurch gekennzeichnet,**
**dass** die Befestigungselemente (10, 11) im Querschnitt zumindest auf zwei sich gegenüberliegenden Seiten von ringaußen nach ringinnen gerichtet tailliert und/oder profiliert sind.

29. Kupplungsring nach den Ansprüchen 25 bis 28,
**dadurch gekennzeichnet,**
**dass** die Befestigungselemente (10, 11) zur Ringachse (23) keilförmig geformt sind, wobei der keilförmig schmale Endbereich (32) ringinnen und der keilförmig weite Endbereich (33) ringaußen sind.

30. Kupplungsring nach Anspruch 29,
**dadurch gekennzeichnet,**
**dass** die Befestigungselemente (10, 11) an ihrem keilförmig weiten Endbereich (33) vorzugsweise äußere Einlassungen/Aussparungen (19) jeweils in Form entweder einer Versenkungsnut oder einer Senkbohrung für die radial gerichteten Verschraubungen (20) aufweisen.

31. Kupplungsring nach den Ansprüchen 25 und 27,
**dadurch gekennzeichnet,**
**dass** die Federelemente (17) aus elastischem Material bestehen.

32. Kupplungsring nach Anspruch 31,
**dadurch gekennzeichnet,**
**dass** die elastischen Federelemente (17) mindestens eine zur Ringachse (23) gerichtete Stützplatte (18) aufweisen.

33. Kupplungsring nach Anspruch 29,
**dadurch gekennzeichnet,**
**dass** die elastischen Federelemente (17) mindestens eine Stützplatte jeweils in topographischer Ausbildungsform, z.B. flächenbombiert und nicht ausschließlich zur Ringachse (23) gerichtet zwischen jeweils zwei Federelementen eingebettet enthält.

34. Kupplungsring nach Anspruch 32,
**dadurch gekennzeichnet,**
**dass** die Stützplatten (18) in Keilform (55) zur Ringachse (23) gerichtet ausgebildet sind.

35. Kupplungsring nach den Ansprüchen 31 bis 33,
**dadurch gekennzeichnet,**
**dass** die Federelemente (17) oder Teile (56, 57) davon mit zumindest einer radial und/oder axial zur Ringachse (23) gerichteten konkaven Taille (39, 54) ausgebildet sind.

## Claims

1. Coupling (30, 49, 61; 40, 60) with coupling ring (1) on two coupling parts (8, 9), where the coupling parts (8, 9) each have a star (2, 3) with star arms (26, 27) and star arm end regions (4, 5), where the two stars (2, 3) are located opposite and axially to each other at an angle and the star arm end regions (4, 5) have at least one threaded borehole (14) for the screw connections (20),
where
- the coupling ring (1) has several fastening elements (10, 11) with at least one continuous borehole (12, 13) aligned radially with the ring axis (23) that are aligned with the axis (23) of the coupling ring (1) running around the ring, where continuous boreholes (12, 13) exist for one screw connection (20) only radially aligned for fastening of the fastening elements (10, 11) at the threaded boreholes (14) of the star arm end region (4, 5) at each star aligned radially to the ring axis (23),
- an elastic spring element (17) exists between each of the adjacent, aligned fastening elements (10, 11) running around the ring,
- the fastening elements (10, 11) of the coupling ring (1) each have a surface (31) axially aligned with the ring axis (23) corresponding to each of the axially aligned surfaces (29) of the star end regions (4, 5) during assembly,
**characterized by** the fact
that
- the star arm end regions (4, 5) adjusted to the fastening elements (10, 11) of the coupling ring (1), each corresponding to one star (2, 3) represent end regions of a star arm (26, 27) originating from a central area (28) of the star (2, 3), where the end regions have a surface (29) aligned with the fastening elements (10, 11), which have a contact connection to the surface (31) at the inner end region (32) of the respective fastening element (10, 11),
- where the alternating arrangement of the fastening elements (10, 11) running around the ring and the elastic spring elements (17) each attached to the respective fastening element (10, 11) in a simultaneous vulcanizing process form a coupling ring (1) made in a simultaneous vulcanizing process, which is screwed as a whole to the two axially offset star arm end regions (4, 5)
- so that the coupling ring (1) forms an elastic, undivided coupling ring allowing uniform tangential pre-tension generation, where the tangential pre-tension creation refers to the two axially aligned stars (2, 3) at an angle of the two coupling parts (8, 9).

2. Coupling according to Claim 1,
**characterized by** the fact
that the fastening element (10) can be connected to the star arm end region (4) of one star (2) in an alternating pattern with the screw connections (20) starting from the fastening element (10) of the coupling ring (1), and then the fastening element (11) adjacent to the fastening element (10) can be connected to the star arm end region (5) of the star (3) adjacent to the star arm region (4) of the other star (2), where another fastening element (10) can be connected again to another star arm end region (4) of a star (2) so that the coupling ring (1) is screwed to all star arm end regions (4, 5) running around the coupling parts (8, 9).

3. Coupling according to Claim 1,
**characterized by** the fact
that the fastening elements (10, 11) of the coupling ring (1) are shaped as a wedge and made of metal.

4. Coupling according to Claim 1,
**characterized by** the fact
that the fastening elements (10, 11) of the coupling ring (1) have different shapes like the elastic spring elements (17).

5. Coupling according to Claim 1,
**characterized by** the fact
that the profiles of the surfaces (31) of the fastening elements (10, 11) and the profiles of the surfaces (29) of the star arm end regions (4, 5) are corresponding form fits.

6. Coupling according to Claim 5,
**characterized by** the fact
that the profiles of the surfaces (31) of the fastening elements (10, 11) are a groove (16) or a spring (15) and the profiles of the surfaces (29) of the star arm end regions (4, 5) are a corresponding form fitting spring (6) or groove (7).

7. Coupling according to Claim 5,
**characterized by** the fact
that the profiles of the surfaces (31) of the fastening elements (10, 11) represent the coupling gearing in form of wedges or teeth and the profiles of the surfaces (29) of the star arm end regions (4, 5) represent the corresponding fitting coupling gearing.

8. Coupling according to Claim 1,
**characterized by** the fact
that the profiles of the surfaces (31) of the fastening elements (10, 11) and the profiles of the surfaces (29) of the star arm end regions (4, 5) are corresponding force fits.

9. Coupling according to Claim 8,
**characterized by** the fact
that the star arm end regions (4, 5) of the stars (2, 3) each have an axially aligned surface (29) with profile that is positioned in front of the screw connection (20) below the surface (31) with profile at the wedge-shaped, narrow end region (32) of the corresponding fastening element (10, 11), where both surfaces (29, 31) make contact during assembly and support the force fit.

10. Coupling according to Claim 8,
**characterized by** the fact
that the profiles of the surfaces (31) of the fastening elements (10, 11) and the profiles of the surfaces (29) of the star arm end regions (4, 5) are correspondingly adjusted even or correspondingly adjusted bent or adjusted topographic surfaces that make contact during assembly and support the force fit.

11. Coupling according to Claim 8,
**characterized by** the fact
that the fastening elements (10, 11) are fixated at the star arm end regions (4, 5) with bolt(s) and fitting screw(s).

12. Coupling according to the Claims 1 and 6 to 11
**characterized by** the fact
that there is a combination of form fit and force fit in the area of the connection between the coupling ring (1) and the two coupling parts (8, 9) allocated to the coupling (30, 49, 61; 40, 60).

13. Coupling according to Claim 3,
**characterized by** the fact
that all fastening element (10, 11) preferably have insertions/cutouts (19) at their wedge-shaped wide end region (33) each in form of a countersunk groove or a counterbore for the radially aligned screw connections (20).

14. Coupling according to Claim 1,
**characterized by** the fact
that the spring elements (17) are made of elastic material.

15. Coupling according to Claim 14,
**characterized by** the fact
that the spring elements (17) have at least one support plate (18) aligned to the ring axis (23).

16. Coupling according to Claim 1,
**characterized by** the fact
that the coupling ring (1) is a combination of fastening elements and vulcanized spring element, where the fastening elements as well as the spring elements have different shapes.

17. Coupling according to Claims 1 to 16
**characterized by** the fact
that the coupling (30) with coupling ring (1) is at least one part of a double-jointed coupling (40, 60), where at least one of the coupling parts (8; 9) is connected via a shaft (21) with the toothed coupling (22) with crowned spline (45) or connected via a shaft (21) with a coupling (30, 49, 61) with the same coupling ring or the coupling ring (1) with the same construction or connected via a shaft (21) with another coupling with gimbal-mounted option.

18. Coupling according to Claim 17,
**characterized by** the fact
that it is inserted in a double-jointed coupling (40) with two joint levels (41, 42) containing the two couplings connected to each other via a shaft (21),
where one joint level (41) is allocated to a toothed coupling (22) with crowned spline (45) with angular and axial compensation option, where the toothed coupling (22) with crowned spline (45) has a sleeve (46) with inner gearing and a coupling hub (47) with corresponding outer gearing, where the shaft (21) is connected to the coupling hub (47) at the end regions, and where the other joint level (42) of the coupling (30, 49) is allocated to the coupling ring (1).

19. Coupling according to Claim 3,
**characterized by** the fact
that the coupling ring (1) is formed as a uniform and undivided and unsegmented coupling ring at least inside the fastening elements (10, 11) and is used for pre-tension creation on two opposing stars (2, 3) aligned at an angle with axially aligned star arm end regions (4, 5) with at least one threaded borehole (14), where a profile (29, 6, 7) running axially to the shaft (23) of the coupling ring (1) at the star arm end regions (4, 5) is present, where a coupling member (9, 8) is allocated to each star (2, 3) and a wedge package coupling is present (30, 49, 61), where the wedge-shaped fastening elements (10, 11) have a profile (15, 16) axially aligned to the ring axis (23), which corresponds to each of the profiles (6, 7) of the star arm end regions (4, 5) during assembly.

20. Coupling according to Claim 19,
**characterized by** the fact
that the elastic wedge package coupling (30) together with the wedge package coupling ring (1) is a single gimbal-mounted wedge package coupling.

21. Coupling according to Claim 19,
**characterized by** the fact
that two elastic wedge package couplings (30, 61) are constructed as double gimbal-mounted coupling (60) through the connection with a shaft (21).

22. Coupling according to Claim 20,
**characterized by** the fact
that the elastic wedge package coupling (30) with a toothed coupling (22) with crowned spline (45) is constructed as gimbal-mounted double-joint coupling (40).

23. Coupling according to Claim 22,
**characterized by** the fact
that the toothed coupling (22) with crowned spline (45) is replaced by a membrane coupling or annular discs coupling.

24. Coupling according to Claims 1 to 23
**characterized by** the fact
that the arrangement of both couplings (22, 49) in their joint levels (41, 42) in the wheelset area of rail vehicles is attached outside as well as inside of wheelsets of rail vehicles.

25. Coupling ring for couplings according to the Claims 1 to 24
**characterized by** the fact
that the coupling ring (1) is constructed as uniform and, at least inside the fastening elements (10, 11), undivided and unsegmented coupling ring, where
- the coupling ring (1) has several fastening elements (10, 11) with at least one continuous borehole (12, 13) aligned radially with the ring axis (23) that are aligned with the axis (23) of the coupling ring (1) running around the ring, where continuous boreholes (12, 13) exist for one screw connection (20) only radially aligned that can only be made from the outside area of the ring (37) for fastening of the fastening elements (10, 11) on two adjusted coupling parts (8, 9) for connection of the two coupling parts (8, 9) via the coupling ring (1),
- the fastening elements (10, 11) of the coupling ring (1) at the inside area of the ring (36) each have a profile running axially to the ring axis (23),
- that between each of the fastening elements (10, 11) running around the ring, an elastic spring element (17) is present, which is attached to the adjacent fastening element (10, 11) during a simultaneous vulcanizing process
- so that an alternating arrangement of the fastening elements (10, 11) running around the rings and the elastic spring elements (17) makes a coupling ring (1) in the simultaneous vulcanizing process that is radially screwed as a whole on two adjusted coupling parts (8, 9) to connect the two coupling parts (8, 9).

26. Coupling ring according to Claim 25,
**characterized by** the fact
that the fastening elements (10, 11) consist of a strong material, especially made of metal.

27. Coupling ring according to Claims 25 to 26
**characterized by** the fact
that the fastening elements (10, 11) with different shapes as well as the elastic spring elements (17) with different shapes have shapes adjusted to the shapes of the fastening elements (10, 11).

28. Coupling ring according to Claim 27,
**characterized by** the fact
that the cross-section of the fastening elements (10, 11) is fitted or profiled at least on two opposing sides from the outside of the ring to the inside.

29. Coupling ring according to Claims 25 to 28
**characterized by** the fact
that the fastening elements (10, 11) are wedged-shaped towards the ring axis (23), where the wedge-shaped narrow end region (32) is located inside the ring and the wedge-shaped wide end region (33) outside the ring.

30. Coupling ring according to Claim 29,
**characterized by** the fact
that the fastening elements (10, 11) preferably have insertions/cutouts (19) at their wedge-shaped wide end region (33) each either in form of a countersunk groove or a counterbore for the radially aligned screw connections (20).

31. Coupling ring according to Claims 25 to 27
**characterized by** the fact
that the spring elements (17) are made of elastic material.

32. Coupling ring according to Claim 31,
**characterized by** the fact
that the elastic spring elements (17) have at least one support plate (18) aligned to the ring axis (23).

33. Coupling ring according to Claim 29,
**characterized by** the fact
that the elastic spring elements (17) have at least one support plate each in topographic construction, e.g. surface-cambered and not only aligned to the ring axis (23) embedded between two spring elements.

34. Coupling ring according to Claim 32,
**characterized by** the fact
that the wedge-shaped (55) support plates (18) are constructed aligned to the ring axis (23).

35. Coupling ring according to Claims 31 to 33
**characterized by** the fact
that the spring elements (17) or parts (56, 57) thereof at least have a concave waist (39, 54) radially and/or axially aligned to the ring axis (23).

## Revendications

1. Accouplement (30, 49, 61 ; 40, 60) muni d'une bague d'accouplement (1) sur deux éléments d'accouplement (8, 9), les éléments d'accouplement (8, 9) constituant respectivement une étoile (2, 3) avec des branches d'étoiles (26, 27) et sur lesquelles se trouvent des parties frontales de branche d'étoile (4, 5), les deux étoiles (2, 3) étant agencées à l'opposé l'une de l'autre et étant décalées axialement l'une par rapport à l'autre selon un angle donné et les parties frontales de branche d'étoile (4, 5) étant munies chacune d'au moins d'un alésage fileté (14) destiné à des vissages (20),
- plusieurs éléments de fixation (10, 11) agencés circulairement par rapport à l'axe (23) de la bague d'accouplement (1) et comprenant chacun au moins un alésage traversant (12, 13) orienté exclusivement radialement par rapport à l'axe (23) de la bague étant associés à la bague d'accouplement (1), les alésages traversants (12, 13) étant destinés à au moins un vissage (20) orienté exclusivement radialement pour la fixation des éléments de fixation (10, 11) aux alésages filetés (14), orientés radialement par rapport à l'axe (23) de la bague des parties frontales de branche d'étoile (4, 5) se trouvant côté changement d'étoile,
- Entre les éléments de fixation (10, 11) circulairement adjacents étant installé respectivement un élément élastique de type ressort (17),
- les éléments de fixation (10, 11) de la bague d'accouplement (1) présentant chacun une surface (31) orientée axialement par rapport à l'axe (23) de la bague, correspondant respectivement à l'état monté à une surface (29), s'étendant axialement, des parties frontales de branche d'étoile (4, 5),
**caractérisé en ce**
**que**
- les parties frontales de branche d'étoile (4, 5) adaptées aux éléments de fixation (10, 11) de la bague d'accouplement (1) appartenant respectivement à une étoile (2, 3) constituent des parties d'extrémité des branches d'étoiles (26, 27) partant d'une partie centrale (28) de l'étoile (2, 3), les parties centrales présentant une surface (29) orientée par rapport aux éléments de fixation (10, 11) avec laquelle il existe un connexion à contact vers la surface (31) à une partie d'extrémité (32) intérieure de l'élément de fixation (10, 11) respectif,
- l'agencement alternatif circulaire des éléments de fixation (10, 11) et des éléments élastiques de type ressort (17) fixés par vulcanisation aux éléments de fixation (10, 11) respectifs adjacents dans une opération de vulcanisation effectuée en même temps, formant une bague d'accouplement (1) réalisée par une opération de vulcanisation pouvant être vissée sous la forme d'un tout sur les deux parties frontales des branches d'étoile (4, 5) décalées axialement,
- de sorte que la bague d'accouplement (1) constitue une bague d'accouplement élastique formée d'un seul tenant et crée une précontrainte tangentielle uniforme, la génération de précontrainte tangentielle se référant aux deux étoiles (2, 3) agencées à l'opposé l'une de l'autre et étant décalées axialement l'une par rapport à l'autre selon un angle donné des deux éléments d'accouplement (8, 9).

2. Accouplement selon la revendication 1
**caractérisé en ce**
**que** par les vissages (20) alternativement, partant d'un élément de fixation (10) de la bague d'accouplement (1), l'élément de fixation (10) peut être associé à la partie frontale de branche d'étoile (4) d'une étoile (2) et ensuite que l'élément de fixation (11) adjacent à l'élément de fixation (10) peut être associé à la partie frontale de branche d'étoile (5), de l'autre étoile (3), adjacente à la partie frontale de branche d'étoile (4) d'une étoile (2), ensuite un autre élément de fixation (10) pouvant être associé à une autre partie frontale de branche d'étoile (4) d'une étoile (2) de façon que la bague d'accouplement (1) soit vissée à toutes les parties frontales de branche d'étoile (4, 5) circulairement sur les éléments d'accouplement (8, 9).

3. Accouplement selon la revendication 1
**caractérisé en ce**
**que** les éléments de fixation (10, 11) de la bague d'accouplement (1) sont cunéiformes et formés métalliquement.

4. Accouplement selon la revendication 1
**caractérisé en ce**
**que** les éléments de fixation (10, 11) de la bague d'accouplement (1) sont pourvus de différentes formes tout comme les éléments élastiques de type ressort (17).

5. Accouplement selon la revendication 1
**caractérisé en ce**
**que** les profils des surfaces (31) des éléments de fixation (10, 11) et les profils des surfaces (29) des parties frontales de branche d'étoile (4, 5) sont des formations crabotées entre elles correspondante.

6. Accouplement selon la revendication 5
**caractérisé en ce**
**que** les profils des surfaces (31) des éléments de fixation (10, 11) sont une rainure (16) ou un ressort (15) et les profils des surfaces (29) des parties frontales de branche d'étoile (4, 5) sont un ressort (6) ou une rainure (7) correspondant à cet effet de façons adaptée et crabotée.

7. Accouplement selon la revendication 5
**caractérisé en ce**
**que** les profils des surfaces (31) des éléments de fixation (10, 11) sont une denture d'accouplement sous la forme de cônes ou de dents et que les profils des surfaces (29) des parties frontales (4, 5) de branche représentent une denture d'accouplement adaptée.

8. Accouplement selon la revendication 1
**caractérisé en ce**
**que** les profils des surfaces (31) des éléments de fixation (10, 11) et les profils des surfaces (29) des parties frontales (4, 5) de branche sont des formations entraînées par adhérence correspondant entre elles.

9. Accouplement selon la revendication 8
**caractérisé en ce**
**que** les parties frontales de branche d'étoile (4, 5) des étoiles (2, 3) présentent une surface (29) avec profil orienté axialement qui est positionnée devant le vissage (20) sous la surface (31) avec profil à la partie d'extrémité (32) étroite conique de l'élément de fixation (10, 11) respectif, les deux surfaces (29, 31) se touchant et assistant l'adhérence à l'état monté.

10. Accouplement selon la revendication 8
**caractérisé en ce**
**que** les profils des surfaces (31) des éléments de fixation (10, 11) et les profils des surfaces (29) des parties frontales de branche d'étoile (4, 5) sont des surfaces planes adaptées entre elles ou courbées adaptées entre elles ou topographiques adaptées entre elles qui se touchent et assistent l'adhérence à l'état monté.

11. Accouplement selon la revendication 8
**caractérisé en ce**
**que** les éléments de fixation (10, 11) sont maintenus aux parties frontales (4, 5) de branche d'étoile par des goupille/s et de vis de réglage.

12. Accouplement selon les revendications 1 et 6 à 11
**caractérisé en ce**
**qu'**il existe une forme mixte d'adhérence et de crabotage dans la zone de liaison entre la bague d'accouplement (1) et les deux éléments d'accouplement (8, 9) affectés à l'accouplement (30, 49, 61 ; 40, 60).

13. Accouplement selon la revendication 3
**caractérisé en ce**
**que** tous les éléments de fixation (10, 11) présentent à leur partie d'extrémité (33) large cunéiforme de préférence des emboîtements/creux (19) respectivement sous la forme d'une rainure d'enfoncement ou d'un perçage d'enfoncement pour les vissages (20) orientés axialement.

14. Accouplement selon la revendication 1
**caractérisé en ce**
**que** les éléments élastiques de type ressort (17) sont composés d'un matériau élastique.

15. Accouplement selon la revendication 14
**caractérisé en ce**
**que** les éléments élastiques de type ressort (17) présentent au moins une plaque d'appui (18) orientée par rapport à l'axe de bague (23).

16. Accouplement selon la revendication 1
caractérisé en ce
la bague d'accouplement (1) présente une combinaison d'éléments de fixation et d'éléments élastiques de type ressort vulcanisés, les éléments de fixation étant pourvus de différentes formes tout comme les éléments élastiques de type ressort.

17. Accouplement selon les revendications 1 à 16
**caractérisé en ce**
**que** l'accouplement (30) avec la bague d'accouplement (1) est au moins une partie d'un accouplement à double articulation (40, 60), au moins l'un des éléments d'accouplement (8, 9) étant associé à un accouplement dentée (22) à denture sphéroïde (45) relié par un arbre (21) ou associé à un accouplement (30, 49, 61) relié à un arbre (21) avec la même bague d'accouplement du type correspondant à la bague d'accouplement (1) ou associé à un autre accouplement relié par un arbre (21) avec des possibilités de déplacement à cardan.

18. Accouplement selon la revendication 17
**caractérisé en ce**
**qu'**il est utilisé dans un accouplement à double articulation (40) à deux niveaux d'articulation (41, 42) comprenant deux accouplements reliés entre eux par un arbre (21),
un niveau d'articulation (41) étant affecté à un accouplement denté (22) à denture sphéroïde (45) avec un pouvoir de compensation angulaire et axial, l'accouplement denté (22) à denture sphéroïde (45) présentant une douille (46) à denture intérieure et un moyeu d'accouplement (47) avec la denture extérieure correspondante, l'arbre (21) étant relié au moyeu d'accouplement (47) côté partie d'extrémité et l'autre niveau d'articulation (42) étant affecté à l'accouplement (30, 49) avec la bague d'accouplement (1).

19. Accouplement selon la revendication 3
**caractérisé en ce**
**que** la bague d'accouplement (1) est formée comme bague d'accouplement homogène au moins d'un seul tenant et non segmentée dans les éléments de fixation (10, 11) et sert à la génération de précontrainte sur deux étoiles (2, 3) opposées dans des positions décalées angulairement avec des parties frontales de branche d'étoile (4, 5) décalées axialement avec respectivement au moins un alésage fileté (14) pour vissages, aux parties frontales de branche d'étoile (4, 5), un profil (29, 6, 7) orienté axialement par rapport à l'axe (23) de la bague d'accouplement (1) étant formé, un élément d'accouplement (9, 8) étant affectée respectivement aux étoiles (2, 3) et un accouplement à paquet angulaire (30, 49, 61) étant installé
les éléments de fixation (10, 11) coniques présentant un profil s'étendant axialement (15, 16) de façon orientée par rapport l'axe de bague (23) qui correspond, bloqué, respectivement au profil (6, 7) des parties frontales de branche d'étoile (4, 5) à l'état monté.

20. Accouplement selon la revendication 19
**caractérisé en ce**
**que** l'accouplement à paquet angulaire (30) avec la bague d'accouplement (1) du paquet angulaire représente un accouplement à bague à paquet angulaire à un cardan.

21. Accouplement selon la revendication 19
**caractérisé en ce**
**que** deux accouplements à paquet angulaire (30, 61) élastiques sont formés en tant qu'accouplement à paquet angulaire (60) à double cardan par la liaison avec un arbre (21).

22. Accouplement selon la revendication 20
**caractérisé en ce**
**que** l'accouplement à paquet angulaire élastique (30) avec un accouplement denté (22) à denture sphéroïde (45) est formé en un accouplement à double articulation (40) à cardan.

23. Accouplement selon la revendication 22
**caractérisé en ce**
**que** l'accouplement denté (22) à accouplement sphéroïde (45) est remplacé par un accouplement à membrane ou un accouplement à disque annulaire.

24. Accouplement selon les revendications 1 à 23
**caractérisé en ce**
**que** la disposition des accouplements (22, 49) à leurs niveaux d'articulation (41, 42) dans la zone des essieux montés de véhicules sur rails est apposée tant hors que dans les essieux montés des véhicules sur rails.

25. Bague d'accouplement selon les revendications 1 à 24
**caractérisée en ce**
**que** la bague d'accouplement (1) est formée comme bague d'accouplement homogène, au moins d'un seul tenant et non segmentée dans les éléments de fixation (10, 11),
- plusieurs éléments de fixation (10, 11) agencés circulairement par rapport à l'axe (23) de la bague d'accouplement (1) et comprenant chacun un alésage traversant (12, 13) orienté exclusivement radialement par rapport à l'axe (23) de la bague étant associés à la bague d'accouplement (1), les alésages traversants (12, 13) étant destinés à au moins un vissage (20) orienté exclusivement radialement, exécutable à partir de la zone extérieure de bague (37) servant à la fixation des éléments de fixation (10, 11) sur deux éléments d'accouplement (8, 9) adaptés servant à la liaison des deux éléments d'accouplement (8, 9) via la bague d'accouplement (1),
- les éléments de fixation (10, 11) de la bague d'accouplement (1) à la zone intérieure de bague (36) présentant respectivement un profil s'étendant axialement, orienté par rapport l'axe de bague (23),
- entre les éléments de fixation (10, 11) adjacents circulairement est installé respectivement un élément élastique de type ressort (17) qui est fixé aux éléments de fixation (10, 11) adjacents dans une opération de vulcanisation effectuée en même temps,
- de façon qu'une disposition alternative circulaire des éléments de fixation (10, 11) et des éléments élastiques de type ressort (17) représente une bague d'accouplement (1) réalisée en une opération de vulcanisation effectuée en même temps qui est vissée radialement en un ensemble sur deux éléments d'accouplement (8, 9) adaptés pour relier les deux éléments d'accouplement (8, 9)

26. Bague d'accouplement selon la revendication 25
**caractérisée en ce**
**que** les éléments de fixation (10, 11) se composent d'un matériau solide, en particulier sont conçus métalliquement.

27. Bague d'accouplement selon la revendication 25 ou 26
**caractérisée en ce**
**que** les éléments de fixation (10, 11) sont prévus avec différentes formes ainsi que les éléments élastiques de type ressort (17) avec différentes formes adaptées aux formes des éléments de fixation (10, 11).

28. Bague d'accouplement selon la revendication 27
**caractérisée en ce**
**que** les éléments de fixation (10, 11) dans leur section, sont taillés et/ou profilés sur deux côtés opposés, orientés de l'extérieur de la bague vers l'intérieur de la bague.

29. Bague d'accouplement selon les revendications 25 à 28
**caractérisée en ce**
**que** les éléments de fixation (10, 11) sont formés de façon cunéiforme vers l'axe de bague (23), la partie d'extrémité étroite (32) cunéiforme étant à l'intérieur de bague et la partie d'extrémité large (33) cunéiforme à l'extérieur de la bague.

30. Bague d'accouplement selon la revendication 29
**caractérisée en ce**
**que** les éléments de fixation (10, 11) présentent à leur partie d'extrémité large (33) cunéiforme de préférence des emboîtements/creux (19) respectivement sous la forme d'une rainure d'enfoncement ou d'un alésage pour les vissages (20) orientés axialement.

31. Bague d'accouplement selon les revendications 25 et 27
**caractérisée en ce**
**que** les éléments élastiques de type ressort (17) sont composés de matériau élastique.

32. Bague d'accouplement selon la revendication 31
**caractérisée en ce**
**que** les éléments de type ressort (17) présentent au moins une plaque d'appui (18) orientée par rapport à l'axe de bague (23).

33. Bague d'accouplement selon la revendication 29
**caractérisée en ce**
**que** les éléments élastiques de type ressort (17) comprennent au moins une plaque d'appui en formation topographique, p.ex. à surface bombée et pas exclusivement orientés par rapport à l'axe de bague (23), logée respectivement entre deux éléments de type ressort.

34. Bague d'accouplement selon la revendication 32
**caractérisée en ce**
**que** les plaques d'appui (18) en forme cunéiforme (55) sont formées de façon orientée par rapport à l'axe de bague (23).

35. Bague d'accouplement selon les revendications 31 à 33
**caractérisée en ce**
**que** les éléments de type ressort (17) ou des parties (56, 57) de ceux-ci sont formés avec au moins une taille (39, 54) concave orientée radialement et/ou axialement par rapport à l'axe de bague (23).
